(19) **Europäisches Patentamt**
**European Patent Office**
**Office européen des brevets**

(11) **EP 4 231 713 A1**

(12) **EUROPEAN PATENT APPLICATION**
published in accordance with Art. 153(4) EPC

(43) Date of publication:
**23.08.2023 Bulletin 2023/34**

(21) Application number: **20958368.1**

(22) Date of filing: **23.10.2020**

(51) International Patent Classification (IPC):
*H04W 48/00* (2009.01)      *H04W 74/00* (2009.01)

(52) Cooperative Patent Classification (CPC):
**H04W 48/00; H04W 74/00**

(86) International application number:
**PCT/CN2020/123429**

(87) International publication number:
**WO 2022/082786 (28.04.2022 Gazette 2022/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
- **LIU, Zhe**
  **Shenzhen, Guangdong 518129 (CN)**

- **YU, Zheng**
  **Shenzhen, Guangdong 518129 (CN)**
- **LI, Chaojun**
  **Shenzhen, Guangdong 518129 (CN)**
- **WEN, Ronghui**
  **Shenzhen, Guangdong 518129 (CN)**

(74) Representative: **Roth, Sebastian**
**Mitscherlich PartmbB**
**Patent- und Rechtsanwälte**
**Karlstraße 7**
**80333 München (DE)**

(54) **COMMUNICATION METHOD AND APPARATUS**

(57)     A communication method and apparatus are disclosed. The method in embodiments of this application is applied to a coverage enhancement scenario. The method includes: A network device may indicate, to a terminal device, whether the terminal device is allowed to access a network, and/or indicate a transmission repetition count or a coverage level of a PDCCH of the terminal device. The terminal device may perform blind detection based on an indication from the network device. According to the technical solutions of the methods in embodiments of this application, network configuration flexibility is improved, blind detection complexity of the terminal device is reduced, network resources are saved, and communication efficiency is improved.

FIG. 4

EP 4 231 713 A1

**Description**

**TECHNICAL FIELD**

Embodiments of this application relate to the communication field, and in particular, to a communication method and apparatus.

**BACKGROUND**

In a random access procedure of a new radio (new radio, NR) communication system, a base station sends a physical downlink control channel (physical downlink control channel, PDCCH) to user equipment (user equipment, UE). The PDCCH is used to schedule a physical downlink shared channel (physical downlink shared channel, PDSCH). The base station sends a random access response (random access response, RAR) on the PDSCH. The RAR carries an uplink scheduling grant used to schedule a physical uplink shared channel (physical uplink shared channel, PUSCH) sent by the user equipment.

When a quantity of receive antennas of the user equipment is small, receiving of the RAR is affected. A manner of repeatedly sending the PDCCH by the base station and receiving the PDCCH by the user equipment is used to enhance effect of receiving the PDCCH by the user equipment, to achieve effect of coverage enhancement. The user equipment obtains, through blind detection, radio resource control (radio resource control, RRC) signaling on the PDSCH to configure a maximum repetition count of a control channel for scheduling the RAR, and determines a specific repetition count based on downlink control information (downlink control information, DCI), to achieve coverage enhancement.

Terminal devices with different quantities of antennas or different receiving capabilities need to receive coverage enhancement configuration information by using a fixed blind detection method, which leads to high blind detection complexity and low network configuration flexibility. Therefore, a method that can improve network configuration flexibility and communication efficiency is urgently needed.

**SUMMARY**

Embodiments of this application provide a communication method and apparatus, to improve network configuration flexibility, reduce complexity of blind detection by a terminal device, save network resources, and improve communication efficiency.

According to a first aspect, an embodiment of this application provides a communication method, including:

In a random access procedure of NR communication, a terminal device sends a network access request to a network device, the network device responds to the terminal device with first information of the network access request, and the terminal device receives the first information.

After receiving the first information, the terminal device may determine access status information of the terminal device or a first repetition count set of a first channel based on the first information, or may determine both the access status information and the first repetition count set. There may be one or more repetition counts in the first repetition count set, and the first repetition count set may be a first repetition receiving set, or may be a first repetition sending set.

The terminal device may determine, based on an indication of the determined access status information, whether the terminal device can or cannot access a network of the network device.

The terminal device may determine, based on the first repetition count set determined based on the first information and in a predefined determining manner, a first repetition count corresponding to the first channel, and receive or send the first channel based on the first repetition count.

In this embodiment of this application, the terminal device may determine, based on the access status information sent by the network device, whether the terminal device can access the network, to avoid a waste of network resources because the terminal device still monitors the first channel when accessing the network is not supported, thereby saving network resources and improving communication efficiency; or determine the first repetition count for transmitting the first channel based on the received repetition count set, to reduce complexity of blind detection by the terminal device.

With reference to the first aspect, in a first implementation of the first aspect of embodiments of this application, the access status information is determined based on a bit status in the first information, the bit status indicates that a terminal device is not allowed to access the network, and the bit status is related to first feature information of the terminal device.

The first feature information of the terminal device includes at least one of the following: bandwidth (channel bandwidth), and a quantity of supported or configured resource units (The resource units may be a resource block (resource block, RB), a resource element (resource element, RE), a subcarrier, an RB group, a resource element group (resource element group, REG), a bundle, a control channel element, a subframe, a radio frame, a slot, a mini-slot, and symbol), number of radio frequency channels, number of hybrid automatic repeat request (hybrid automatic repeat request, HARQ) processes, supported peak rate, an application scenario, a delay requirement, a processing capability, a protocol version, a duplex manner (half-duplex, full-duplex), and a service (IoT applications such as video surveillance and mobile broadband (mobile broadband, MBB)), aggregation level information, candidate control channel information, a terminal device type, a quantity of transmit antennas of the terminal device, a quantity of receive antennas of the terminal device, a resource, a resource index, a level, a level index, an enhancement level, an enhancement level index, a repetition level, a repetition level index, a repetition count, a repetition count index, a coverage enhancement value, an index of a coverage enhancement range, a path loss value, an index of a path loss range, a reference signal received power value, an index of a reference signal received power range, a reference signal received quality value, an index of a reference signal received quality range, a channel quality information value, an index of a channel quality information range, a service type, an index of the service type, a power saving requirement, an index of the power saving requirement, a delay requirement, an index of the delay requirement, a pre-specified quantity of times of detecting the first channel, an index of a pre-specified quantity of times of detecting the first channel, a mobility requirement, and an index of the mobility requirement.

With reference to the first aspect, in a second implementation of the first aspect of embodiments of this application, the first information may include repetition level information, and the repetition level information may indicate the repetition count set of the first channel.

With reference to the second implementation of the first aspect, in a third implementation of the first aspect of embodiments of this application, the first repetition count set is one or more repetition counts limited based on a first maximum repetition count. The terminal device further receives the first maximum repetition count configured by the network device by using an RRC message. The terminal device may input the first maximum repetition count into the first repetition count set to determine actual one or more repetition counts, and then determine the first repetition count based on first indication information sent by the network device.

With reference to the second implementation or the third implementation of the first aspect, in a fourth implementation of the first aspect of embodiments of this application, the repetition level information includes a first value, and the first value indicates that the first repetition count is 1, or indicates that the first repetition count is a first predefined value.

With reference to the first aspect, in a fifth implementation of the first aspect of embodiments of this application, the first information includes second feature information, the second feature information is used to determine the first repetition count set, and the second feature information is related to the first repetition count.

With reference to the first aspect, in a sixth implementation of the first aspect of embodiments of this application, when the first repetition count set indicates one maximum repetition count, the terminal device may determine a plurality of repetition counts indicated by the maximum repetition count through table-walking, and determines the first repetition count from the plurality of repetition counts based on the first indication information sent by the network device. When the first repetition count set indicates a plurality of repetition counts, the terminal device may directly determine the first repetition count based on the first indication information sent by the network device.

With reference to the sixth implementation of the first aspect, in a seventh implementation of the first aspect of embodiments of this application, the terminal device may further calculate a second repetition count of a second channel based on the determined first repetition count of the first channel and a first parameter sent by the network device. The first parameter may be a parameter obtained by directly sending by the network device, or may be obtained in another manner, for example, first indication information sent by the network device indicates a parameter set to obtain a first parameter.

The terminal device may determine a repetition count of a PDSCH based on a repetition count of a PDCCH, or may determine a repetition count of a PDCCH based on a repetition count of a PDSCH.

Alternatively, the terminal device may determine a repetition count of a PUSCH based on the repetition count of the PDCCH, or may determine the repetition count of the PDCCH based on the repetition count of the PUSCH.

In this embodiment of this application, the terminal device may determine the second repetition count based on the first repetition count, and this reduces a quantity of bits for indicating the second repetition count in DCI sent by the network device, and reduces DCI overheads.

With reference to the sixth implementation or the seventh implementation of the first aspect, in an eighth implementation of the first aspect of embodiments of this application, after determining the first repetition count and receiving the first parameter, the terminal device may perform a linear operation, for example, multiplication calculation on the first repetition count and the first parameter to obtain the second repetition count.

According to a second aspect, an embodiment of this application provides a communication method, including:

In a random access procedure of NR communication, a terminal device sends a network access request to a network device. The network device may obtain first feature information of the terminal device based on the network access request of the terminal device, or may obtain the first feature information of the terminal device in another manner, for example, through network query.

Optionally, the first feature information includes two types of REDCAP UE and one type of legacy UE.

After obtaining the first feature information, the network device may determine whether the terminal device corresponding to the first feature information is allowed to access, and indicate the terminal device based on access status information. When the terminal device corresponding to the first feature information is allowed to access the network device, the network device may determine, based on the first feature information, a first repetition count for sending a first channel, determine a first repetition count set of the first channel, and then send the first repetition count set to the terminal device. The network device transmits the first channel to the terminal device based on the first repetition count.

In this embodiment of this application, the network device may send corresponding access status information and/or the first repetition count set to the terminal device based on the first feature information of the terminal device that applies to access a network, so that the terminal device can determine the first repetition count for transmitting the first channel, and this improves network configuration flexibility.

With reference to the second aspect, in a first implementation of the second aspect of embodiments of this application, the access status information is determined based on a bit status in the first information, the bit status indicates that a terminal device is not allowed to access the network, and the bit status is related to the first feature information of the terminal device.

With reference to the second aspect, in a second implementation of the second aspect of embodiments of this application, the first information includes repetition level information and a first maximum repetition count, where the repetition level information indicates the first repetition count set, and the first maximum repetition count is determined based on the first feature information.

With reference to the second implementation of the second aspect, in a third implementation of the second aspect of embodiments of this application, the repetition level information includes a first value, and the first value indicates that the first repetition count is 1, or indicates that the first repetition count is a first predefined value.

The first predefined value may be a maximum repetition count $R_{max}$, or may be another value. For example, $\frac{R_{max}}{2}$, and this is not specifically limited herein.

With reference to the second aspect, in a fourth implementation of the second aspect of embodiments of this application, the first information includes second feature information, the second feature information is used to determine the first repetition count set, and the second feature information is related to the first repetition count.

With reference to the second aspect, in a fifth implementation of the second aspect of embodiments of this application, when the terminal device corresponding to the first feature information is allowed to access, after the network device determines the first repetition count set of the first channel based on the first feature information, the network device may further determine first indication information indicating the first repetition count in the first repetition count set, and send the first indication information to the terminal device.

In this embodiment of this application, the network device configures the first indication information based on the first feature information, so that accuracy of determining the first repetition count by the terminal device can be improved.

With reference to the fifth implementation of the second aspect, in a sixth implementation of the second aspect of embodiments of this application, the first information further includes a first parameter, and the first parameter is used to determine a second repetition count of a second channel with reference to the foregoing first repetition count.

The first channel is a physical downlink control channel, and the second channel is a physical downlink shared channel; or the first channel is a physical downlink shared channel, and the second channel is a physical downlink control channel.

Alternatively, the first channel is a physical downlink control channel, and the second channel is a physical uplink shared channel; or the first channel is a physical uplink shared channel, and the second channel is a physical downlink control channel.

According to a third aspect, an embodiment of this application provides a communication method, including:

In a random access procedure of NR communication, a terminal device sends a network access request to a network device. The network device responds to the network access request based on a terminal device type, and sends a first maximum repetition count or a first repetition count set to the terminal device. The first repetition count set includes one or more repetition counts. When there is one first repetition count set, the first repetition count set is equivalent to the first maximum repetition count.

The terminal device receives the first maximum repetition count or the first repetition count set, and may determine, based on an adjustment factor, a first repetition count from the first maximum repetition count or the first repetition count set.

The terminal device may process a first channel based on the determined first repetition count. For example, when the first channel is a PDCCH, the terminal device may receive the PDCCH based on the first repetition count. When the first channel is a PDSCH, the terminal device may receive the PDSCH based on the first repetition count.

When the first channel is a PUSCH, the terminal device may upload the PUSCH based on the first repetition count.

In this embodiment of this application, the terminal device adjusts, by using an adjustment factor, the first maximum repetition count or the first repetition count set sent by the network device, to determine the first repetition count of the first channel corresponding to the terminal device, and this improves network configuration flexibility.

With reference to the third aspect, in a first implementation of the third aspect of embodiments of this application, the terminal device receives the first maximum repetition count sent by the network device, and may adjust the first maximum repetition count based on the adjustment factor, to obtain a second maximum repetition count actually corresponding to the terminal device. The terminal device performs table-walking on the second maximum repetition count to obtain a plurality of repetition counts, and then determines the first repetition count based on an indication of first indication information sent by the network device. The first indication information may be physical layer signaling, for example, DCI, or higher layer signaling radio resource control signaling RRC.

With reference to the third aspect, in a second implementation of the third aspect of embodiments of this application, the terminal device receives the first repetition count set sent by the network device, and may adjust the first repetition count set based on an adjustment factor, to obtain a second repetition count set actually corresponding to the terminal device. The terminal device may determine the first repetition count based on an indication of first indication information sent by the network device.

Optionally, the second repetition count set may include the first repetition count set.

With reference to the third aspect, or the first implementation to the second implementation of the third aspect, in a third implementation of the third aspect of embodiments of this application, the adjustment factor may be preconfigured by the network device by using higher layer signaling or indicated by physical layer information, or may be a predefined protocol setting by the network device, or may be predefined by the network device based on first feature information and sent to the terminal device.

According to a fourth aspect, an embodiment of this application provides a communication method, including:

In a random access procedure of 5G NR communication, a terminal device sends a network access request to a network device. The network device may obtain first feature information of the terminal device based on the network access request of the terminal device or a resource of the network access request, or may obtain the first feature information of the terminal device in another manner, for example, through network query.

Optionally, the first feature information includes two types of REDCAP UE and one type of legacy UE.

After determining the first feature information, the network device may match, according to a predefined rule and based on the first feature information, a first repetition count corresponding to a first channel.

The network device may determine, based on the determined first repetition count, a second maximum repetition count or a second repetition count set corresponding to the terminal device, and then may adjust the second maximum repetition count or the second repetition count set based on a preconfigured adjustment factor, to obtain a corresponding first maximum repetition count or a first repetition count set. The network device may send the first maximum repetition count or the first repetition count set to the terminal device based on the determined first maximum repetition count or the first repetition count set, and repeatedly send the first channel to the terminal device based on the first repetition count.

In this embodiment of this application, the network device adjusts, by using the adjustment factor, a maximum repetition count or a repetition count set sent to the terminal device, to adapt to a plurality of terminal devices, and improve network configuration flexibility.

With reference to the fourth aspect, in a first implementation of the fourth aspect of embodiments of this application, the network device may preconfigure the adjustment factor for the terminal device by using higher layer signaling or indicate the adjustment factor for the terminal device by using physical layer information, may set the adjustment factor by predefining a protocol, or may define the adjustment factor based on the first feature information when the first maximum repetition count or the first repetition count set is sent.

According to a fifth aspect, an embodiment of this application provides an indication method, including:

A terminal device indicates a device type of the terminal device to a network device via a message 1 (Msg1), a message 3 (Msg3), a message A (MsgA), a message 5 (Msg5), or a PUSCH that carries terminal device capability information in a random access procedure. The terminal device may indicate the device type of the terminal device to the network device by using a correspondence between a transmission resource and a device type, or may indicate the device type of the terminal device to the network device by using a specific bit or field.

In this embodiment of this application, the terminal device indicates the device type of the terminal device to the network device by using the correspondence between a transmission resource and a device type or by using the specific bit or field. A plurality of indication manners are provided, thereby improving network configuration flexibility.

According to a sixth aspect, an embodiment of this application provides an indication method, including:

A network device uses a master information block (master information block, MIB), a physical broadcast channel (physical broadcast channel, PBCH), a system information block (system information block, SIB), or a PDCCH that schedules a PDSCH carrying a SIB 1 to indicate the device type of the terminal device reported by the terminal device. The system information block may be the SIB 1, and the network device may indicate that different device types of terminal devices are corresponding to different random access sequences, or indicate the terminal device to report first feature information to identify a type of the terminal device. For the first feature information, refer to related descriptions about the first feature information in the implementations of the first aspect.

In this embodiment of this application, the network device identifies the device type by indicating that different device types are corresponding to different random access sequences or indicating the terminal device to report the first feature information. A plurality of indication manners are provided, thereby improving network configuration flexibility.

According to a seventh aspect, an embodiment of this application provides a communication apparatus, including:

a transceiver unit, configured to: receive first information from a network device, determine a first repetition count of a first channel based on a first repetition count set, and transmit the first channel based on the first repetition count; and

a processing unit, configured to: determine access status information and/or the first repetition count set of the first channel based on the first information, where the first repetition count set includes at least one repetition count; and determine, based on the access status information, whether to access a network.

The communication apparatus is configured to perform the method in the first aspect or any implementation of the first aspect.

According to an eighth aspect, an embodiment of this application provides a communication apparatus, including:

a processing unit, configured to determine first feature information of a terminal device; and

a transceiver unit, configured to send first information to the terminal device based on the first feature information, and transmit a first channel based on a first repetition count, where the first information indicates access status information and/or a first repetition count set of the first channel, the first repetition count set includes at least one repetition count, and the first repetition count is determined based on the first feature information.

The communication apparatus is configured to perform the method in the second aspect or any implementation of the second aspect.

According to a ninth aspect, an embodiment of this application provides a communication apparatus, including:

a transceiver unit, configured to: receive a first maximum repetition count or a first repetition count set, where the first repetition count set includes at least one repetition count, and transmit a first channel based on the first repetition count; and

a processing unit, configured to determine the first repetition count of the first channel based on the first maximum repetition count or the first repetition count set and an adjustment factor.

The communication apparatus is configured to perform the method in the third aspect or any implementation of the third aspect.

According to a tenth aspect, an embodiment of this application provides a communication apparatus, including:

a processing unit, configured to determine first feature information of a terminal device; and

a sending unit, configured to: send a first maximum repetition count or a first repetition count set to the terminal device based on the first feature information, and transmit a first channel based on a first repetition count, where the first repetition count is determined based on the first feature information, and the first maximum repetition count or the first repetition count set is determined based on the first repetition count and an adjustment factor.

The communication apparatus is configured to perform the method in the fourth aspect or any implementation of the fourth aspect.

According to an eleventh aspect, an embodiment of this application provides a communication apparatus. The communication apparatus may be the terminal device according to the fifth aspect, an electronic device configured in the terminal device, or a larger device including the terminal device. The terminal device includes a corresponding means (means) or module configured to perform the foregoing method. For example, the communication apparatus includes a processing unit (sometimes also referred to as a processing module) and a transceiver unit (sometimes also referred to as a transceiver module). The processing unit is configured to: receive indication information from a network device by using the transceiver unit, and send device type indication information to the network device by using the transceiver module. For another example, the communication apparatus includes a processor, coupled to a memory, and configured to execute instructions in the memory, to implement the method performed by the terminal device in the fifth aspect.

Optionally, the communication apparatus further includes another component, for example, an antenna, an input/output module, and an interface. These components may be hardware, software, or a combination of software and hardware.

According to a twelfth aspect, an embodiment of this application provides a communication apparatus. The communication apparatus may be the network device according to the sixth aspect, for example, a base station, or a baseband apparatus in a base station. In an optional implementation, the communication apparatus includes the baseband apparatus and a radio frequency apparatus. In another optional implementation, the communication apparatus includes a processing unit (sometimes also referred to as a processing module) and a transceiver unit (sometimes also referred to as a transceiver module).

The processing unit is configured to: send first indication information to a terminal device by using the transceiver unit, and receive device type indication information from the terminal device by using the transceiver module.

In an optional implementation, the communication apparatus includes the processing unit, configured to: couple to a storage unit, and execute a program or instructions in the storage unit, to enable the communication apparatus to perform a function of a first network device and/or a function of a second network device.

According to a thirteenth aspect, an embodiment of this application provides a communication apparatus. The communication apparatus includes at least one processor, a storage system, an input/output (input/output, I/O) interface, and computer-executable instructions that are stored in the storage system and can run on the processor. When the computer-executable instructions are executed by the processor, the processor performs the method in any one of the first aspect or the implementations of the first aspect, or any one of the third aspect or the implementations of the third aspect.

According to a fourteenth aspect, an embodiment of this application provides a communication apparatus. The communication apparatus includes at least one processor, a storage system, an input/output (input/output, I/O) interface, and computer-executable instructions that are stored in a storage system and can run on the processor. When the computer-executable instructions are executed by the processor, the processor performs the method in any one of the second aspect or the implementations of the second aspect, or any one of the fourth aspect or the implementations of the fourth aspect.

According to a fifteenth aspect, an embodiment of this application provides a computer-readable storage medium, where the computer-readable storage medium stores a computer program. When the computer program is run on a computer, the computer is enabled to perform the method in any one of the first aspect or the implementations of the first aspect.

According to a sixteenth aspect, an embodiment of this application provides a computer-readable storage medium, where the computer-readable storage medium stores a computer program. When the computer program is run on a computer, the computer is enabled to perform the method in any one of the second aspect or the implementations of the second aspect.

According to a seventeenth aspect, an embodiment of this application provides a computer-readable storage medium, where the computer-readable storage medium stores a computer program. When the computer program is run on a computer, the computer is enabled to perform the method in any one of the third aspect or the implementations of the third aspect.

According to an eighteenth aspect, an embodiment of this application provides a computer-readable storage medium, where the computer-readable storage medium stores a computer program. When the computer program is run on a computer, the computer is enabled to perform the method in any one of the fourth aspect or the implementations of the fourth aspect.

According to a nineteenth aspect, an embodiment of this application provides a computer-readable storage medium, where the computer-readable storage medium stores a computer program. When the computer program is run on a computer, the computer is enabled to perform the method according to the fifth aspect.

According to a twentieth aspect, an embodiment of this application provides a computer-readable storage medium, where the computer-readable storage medium stores a computer program. When the computer program is run on a computer, the computer is enabled to perform the method according to the sixth aspect.

According to a twenty-first aspect, an embodiment of this application provides a computer program product. When the computer program product runs on a computer, the computer is enabled to perform the method in any one of the first aspect or the implementations of the first aspect.

According to a twenty-second aspect, an embodiment of this application provides a computer program product. When the computer program product runs on a computer, the computer is enabled to perform the method in any one of the second aspect or the implementations of the second aspect.

According to a twenty-third aspect, an embodiment of this application provides a computer program product. When the computer program product runs on a computer, the computer is enabled to perform the method in any one of the third aspect or the implementations of the third aspect.

According to a twenty-fourth aspect, an embodiment of this application provides a computer program product. When the computer program product runs on a computer, the computer is enabled to perform the method in any one of the fourth aspect or the implementations of the fourth aspect.

According to a twenty-fifth aspect, an embodiment of this application provides a computer program product. When the computer program product runs on a computer, the computer is enabled to perform the method according to the fifth aspect.

According to a twenty-sixth aspect, an embodiment of this application provides a computer program product. When the computer program product runs on a computer, the computer is enabled to perform the method according to the sixth aspect.

According to a twenty-seventh aspect, an embodiment of this application provides a chip. When the chip runs on a device, the device is enabled to perform the method in any one of the first aspect or the implementations of the first aspect.

According to a twenty-eighth aspect, an embodiment of this application provides a chip. When the chip runs on a device, the device is enabled to perform the method in any one of the second aspect or the implementations of the second aspect.

According to a twenty-ninth aspect, an embodiment of this application provides a chip. When the chip runs on a device, the device is enabled to perform the method in any one of the third aspect or the implementations of the third aspect.

According to a thirtieth aspect, an embodiment of this application provides a chip. When the chip runs on a device, the device is enabled to perform the method in any one of the fourth aspect or the implementations of the fourth aspect.

According to a thirty-first aspect, an embodiment of this application provides a chip. When the chip runs on a device, the device is enabled to perform the method according to the fifth aspect.

According to a thirty-second aspect, an embodiment of this application provides a chip. When the chip runs on a device, the device is enabled to perform the method according to the sixth aspect.

According to a thirty-third aspect, an embodiment of this application provides a communication system. The communication system includes the communication apparatus provided in the seventh aspect, the ninth aspect, or the eleventh aspect and the communication apparatus provided in the eighth aspect, the tenth aspect, or the twelfth aspect.

## BRIEF DESCRIPTION OF DRAWINGS

FIG. 1 is a schematic diagram of a structure of contention-based random access according to an embodiment of this application;

FIG. 2 is a schematic diagram of a structure of non-contention-based random access according to an embodiment of this application;

FIG. 3 is a schematic diagram of a structure of transmission between a base station and UE according to an embodiment of this application;

FIG. 4 is a schematic flowchart of a communication method according to an embodiment of this application;

FIG. 5 is another schematic flowchart of a communication method according to an embodiment of this application;

FIG. 6 is another schematic flowchart of a communication method according to an embodiment of this application;

FIG. 7 is another schematic flowchart of a communication method according to an embodiment of this application;

FIG. 8 is another schematic flowchart of a communication method according to an embodiment of this application;

FIG. 9 is another schematic flowchart of a communication method according to an embodiment of this application;

FIG. 10 is a schematic diagram of a structure of a communication apparatus according to an embodiment of this application;

FIG. 11 is another schematic diagram of a structure of a communication apparatus according to an embodiment of this application;

FIG. 12 is another schematic diagram of a structure of a communication apparatus according to an embodiment of this application;

FIG. 13 is another schematic diagram of a structure of a communication apparatus according to an embodiment of this application;

FIG. 14 is another schematic diagram of a structure of a communication apparatus according to an embodiment of this application;

FIG. 15 is another schematic diagram of a structure of a communication apparatus according to an embodiment of this application; and

FIG. 16 is another schematic diagram of a structure of a communication apparatus according to an embodiment of this application.

**DESCRIPTION OF EMBODIMENTS**

The following describes embodiments of this application with reference to the accompanying drawings. It is clear that the described embodiments are merely some rather than all of the embodiments of this application. A person of ordinary skill in the art may learn that, with technology development and emergence of a new scenario, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The following clearly describes the technical solutions in embodiments of this application with reference to the accompanying drawings in embodiments of this application. In descriptions of this application, "/" means "or" unless otherwise specified. For example, A/B may represent A or B. In this application, "and/or" describes only a correspondence relationship for describing associated objects and represents that three relationships may exist. For example, A and/or B may represent the following three cases: Only A exists, both A and B exist, and only B exists. In addition, in the descriptions of this application, "at least one item" means one or more items, and "a plurality of items" means two or more items. "At least one item (piece) of the following" or a similar expression thereof means any combination of these items, including a singular item (piece) or any combination of plural items (pieces). For example, at least one of a, b, or c may indicate: a; b; c; a and b; a and c; b and c; or a, b, and c; where a, b, and c may be singular or plural.

Embodiments of this application provide a communication method and apparatus, to reduce complexity of blind detection, and save network resources.

A terminal device is, for example, UE, and a random access network device is, for example, a base station. A procedure includes contention-based random access and non-contention-based random access. The base station may be a 4G base station eNB or a 5G base station gNB, or may be another future communication architecture.

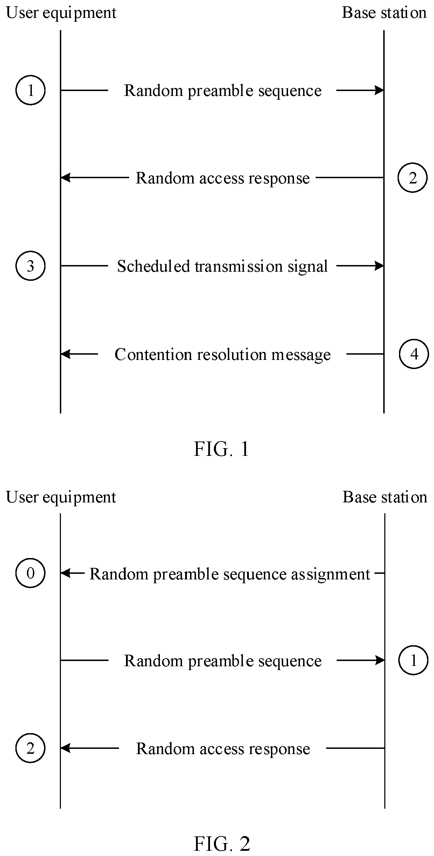

Refer to a contention-based random access architecture shown in FIG. 1. Step 1: UE sends a random access preamble (random access preamble) sequence on a physical random access channel (physical random access channel, PRACH). Step 1 is performed via a message 1 (Msgl). A base station obtains a preamble ID by detecting a preamble, that is, a random access preamble identifier (random access preamble identifier, RAPID).

Step 2: The base station sends a random access response (random access response, RAR) to the UE. Step 2 is performed via a Msg2. Before sending the random access response, a physical downlink control channel PDCCH is first sent, and the PDCCH schedules a physical downlink shared channel PDSCH. The random access response is carried on the PDSCH for sending, and the RAR carries timing advance (timing advance, TA) corresponding to a transmission delay estimated by the base station, the RAPID, and a temporary cell-radio network temporary identity (temporary cell-radio network temporary identity, TC-RNTI), and an uplink (uplink, UL) grant (Grant) required for the UE to send a Msg3 in step 3. The UE adjusts uplink timing by using the TA.

Step 3: Send a scheduled transmission (scheduled transmission) signal based on scheduling of the UL grant in the RAR. Step 3 is performed via the Msg3, where the Msg3 carries identification information of the UE used for conflict resolution.

Step 4: The base station sends a contention resolution (contention resolution) message to the UE on the PDSCH. Step 4 is performed via a Msg4, and this step resolves contention and conflict caused when a plurality of UEs attempt to use a same random access resource and a same preamble for access.

Refer to a non-contention-based random access architecture shown in FIG. 2. Non-contention-based random access uses a dedicated random access resource and preamble that are sent by the base station by using a random access preamble assignment (random access preamble assignment), and no contention or conflict exists. Therefore, only step 1 and step 2 are needed to be performed, and step 3 and step 4 are not needed to be performed. The dedicated random access resource may be indicated by a PRACH time-frequency resource index (Mask Index).

In step 2, the base station sends the PDSCH carrying the RAR to the UE, where the RAR carries the TA corresponding to the transmission delay indicated in the Msg1, the RAPID, the TC-RNTI, and the UL grant used for sending the Msg3. Because a quantity of receive antennas of the terminal device reduces, coverage is small, and reception of the RAR and the Msg4 in an initial access process is affected. Therefore, covering recovery needs to be performed through reception, where one aspect is covering recovery of the RAR. The terminal device may include a reduced capability UE (reduced capability UE, REDCAP UE), and a quantity of antennas of the REDCAP UE may be one transmit antenna and one receive antenna (that is, 1T1R), or one transmit antenna and two receive antennas. In addition, if bandwidth and the quantity of transmit antennas of the REDCAP UE are reduced, uplink coverage is also affected. For example, covering recovery also needs to be performed for transmission of a physical uplink shared channel (physical uplink shared channel, PUSCH). It should be noted that covering recovery and coverage enhancement in this embodiment of this application have a same meaning, and may be equivalently interchanged. Details are not described herein again.

In an LTE coverage enhancement technology, a PDCCH and a PDSCH are configured to be repeatedly sent for a plurality of times in LTE, to enhance coverage for sending the PDCCH and the PDSCH by the base station, and improve accuracy of successful receiving by the UE.

1. The PDCCH is repeatedly sent for a plurality of times to enhance PDCCH coverage. A maximum repetition count ($R_{max}$) of a control channel for scheduling the RAR is configured by using RRC signaling, and a specific repetition count is indicated in a DCI format (format) 6-1A, which is specifically as follows.

RRC signaling (physical downlink control channel, MPDCCH) mpdcch - repetition count (NumRepetition) - maximum repetition count of the PDCCH for scheduling the RAR in RA.

A DCI subframe repetition number (subframe repetition number) field in the DCI format 6-1A is used. When the field is two bits (bits), a column in the following Table 1 is indicated, to indicate a specific repetition count, r1, r2, r3 and r4 in the table indicate different repetition count levels, r1 is a level with a minimum repetition count, and r4 is a level with a maximum repetition count.

**Table 1**

| $R_{max}$ | r1 | r2 | r3 | r4 |
|---|---|---|---|---|
| 1 | 1 | - | - | - |
| 2 | 1 | 2 | - | - |
| 4 | 1 | 2 | 4 | - |
| >=8 | $\dfrac{R_{max}}{8}$ | $\dfrac{R_{max}}{4}$ | $\dfrac{R_{max}}{2}$ | $R_{max}$ |

In example 1, if the RRC indicates that the maximum repetition count is 4, corresponding to the foregoing table, r1 corresponds to a repetition count of 1, r2 corresponds to a repetition count of 2, and r3 corresponds to a repetition count of 4. For example, if the network device indicates, by using DCI, that the specific repetition count is r1, a quantity of times that the PDCCH is repeatedly sent is 1. In example 2, if the RRC indicates that the maximum repetition count is 16, corresponding to the foregoing table, r1 corresponds to 2, r2 corresponds to 4, r3 corresponds to 8, and r4 corresponds to 16. A specific repetition count may be determined by a determined repetition count level that is indicated by the DCI.

2. The PDSCH is repeatedly sent for a plurality of times to enhance PDSCH coverage. A maximum repetition count of the PDSCH carrying the RAR is configured by using RRC signaling, a PDSCH repetition level table is defined in 3GPP TS 36.213, and the repetition count is indicated by using a DCI format 6-1A, which is specifically as follows.

A maximum repetition count of the PDSCH corresponding to a coverage enhancement level A is configured by using RRC signaling pdsch - max (max) NumRepetition control element (control element, CE) mode A (modeA), and may be set to 16 or 32.

A field repetition number in the DCI format 6-1A indicates a specific PDSCH repetition level corresponding to a higher layer parameter (Higher layer parameter) in Table 2, to indicate a specific repetition count.

**Table 2**

| Higher layer parameter 'pdsch-maxNumRepetitionCEmodeA' | {n1, n2, n3, n4} |
|---|---|
| Not configured | { 1, 2, 4, 8} |
| 16 | {1, 4, 8, 16} |
| 32 | {1, 4, 16, 32} |

For example, if the maximum repetition count configured in the RRC signaling is 16, a candidate repetition count set is {1, 4, 8, 16} obtained by querying the foregoing table, and the network device indicates a specific repetition count by using DCI. The terminal device may determine the specific repetition count with reference to a pdsch-max-NumRepetitionCEmodeA parameter and an indication of the DCI. For example, two bits in the DCI may indicate a repetition count in { 1, 4, 8, 16}, that is, a quantity of transmissions of the PDSCH, and Not configured indicates that the PDSCH is not configured.

For a PDCCH, because a system information block (system information block, SIB) is carried in the PDSCH for transmission, the PDSCH may be scheduled by the PDCCH. The PDCCH includes one or more control channel elements (control channel elements, CCEs), and is specifically determined based on an aggregation level, for example, as shown in Table 3.

**Table 3**

| Aggregation level | Number of CCEs |
|---|---|
| 1 | 1 |
| 2 | 2 |
| 4 | 4 |
| 8 | 8 |
| 16 | 16 |

A relationship between different aggregation levels (aggregation levels, AL) supported by the PDCCH and CCEs may be represented through the following Table 4.

**Table 4**

| CCE resources | CCE 0 | CCE 1 | CCE 2 | CCE 3 | CCE 4 | CCE 5 | CCE 6 | CCE 7 | CCE 8 | CCE 9 | CCE 10 | CCE 11 | CCE 12 | CCE 13 | CCE 14 | CCE 15 |
|---|---|---|---|---|---|---|---|---|---|---|---|---|---|---|---|---|
| AL=1 | PDCCH 0 | PDCCH 1 | PDCCH 2 | PDCCH 3 | PDCCH 4 | PDCCH 5 | PDCCH 6 | PDCCH 7 | PDCCH 8 | PDCCH 9 | PDCCH 10 | PDCCH 11 | PDCCH 12 | PDCCH 13 | PDCCH 14 | PDCCH 15 |
| AL=2 | PDCCH 16 | | PDCCH 17 | | PDCCH 18 | | PDCCH 19 | | PDCCH 20 | | PDCCH 21 | | PDCCH 22 | | PDCCH 23 | |
| AL=4 | PDCCH 24 | | | | PDCCH 25 | | | | PDCCH 26 | | | | PDCCH 27 | | | |
| AL=8 | PDCCH 28 | | | | | | | | PDCCH 29 | | | | | | | |
| AL=16 | PDCCH 30 | | | | | | | | | | | | | | | |

A control resource set (Control resource set, CORESET) is a new concept introduced in NR, and represents a time-frequency resource set used to carry a PDCCH.

One UE may be configured with a plurality of CORESETs, and each CORESET can be bound to only one mapping relationship between a CCE and a resource element group (resource element group, REG). The REG is a basic unit of PDCCH resource mapping. One REG is defined as one RB on one OFDM symbol. Resource element group bundle (REG bundle) is a new concept introduced in NR. REGs first form an REG bundle through time-first (time-first) mapping, and then is mapped to a control resource in an interleaved or non-interleaved manner at a granularity of the REG bundle. One REG bundle (REG combination) includes a group of REGs that are consecutive in time domain and/or frequency domain. A size of one REG bundle is equal to a size of an REG occupied in frequency domain multiplied by a size of an OFDM symbol occupied in time domain. CCEs forming the PDCCH are mapped to a CORESET (control-resource set, control resource set) in a basic unit of the REG bundle. The REGs on the CORESET are numbered in ascending order from the time domain to the frequency domain.

An REG bundle includes L consecutive REGs.

When blindly detecting a PDCCH, the UE first obtains information about the CORESET, where the CORESET may be understood as a resource set, and a base station sends the PDCCH on a PDCCH candidate (candidate) resource in the CORESET. The UE detects all candidates through blind detection according to a specific rule (the rule includes detecting each aggregation level, corresponding different aggregation levels have different candidates, and detecting different types of scrambling) until the PDCCH is successfully decoded.

There may be different device types of terminal devices, for example, a terminal device type 1 and a terminal device type 2, and first feature information of the terminal device type 1 and the terminal device type 2 are different. The first feature information of the terminal device includes at least one of the following: bandwidth (channel bandwidth), and a quantity of supported or configured resource units (The resource units may be an RB, an RE, a subcarrier, an RB group, an REG bundle, a control channel element, a subframe, a radio frame, a slot, a mini-slot, and symbol), number of radio frequency channels, number of hybrid automatic repeat request (hybrid automatic repeat request, HARQ) processes, supported peak rate, an application scenario, a delay requirement, a processing capability, a protocol version, a duplex manner (half-duplex, full-duplex), and a service (IoT applications such as video surveillance and mobile broadband (mobile broadband, MBB)), aggregation level information, candidate control channel information, a terminal device type, a quantity of transmit antennas of the terminal device, a quantity of receive antennas of the terminal device, a resource, a resource index, a level, a level index, an enhancement level, an enhancement level index, a repetition level, a repetition level index, a repetition count, a repetition count index, a coverage enhancement value, an index of a coverage enhancement range, a path loss value, an index of a path loss range, a reference signal received power value, an index of a reference signal received power range, a reference signal received quality value, an index of a reference signal received quality range, a channel quality information value, an index of a channel quality information range, a service type, an index of the service type, a power saving requirement, an index of the power saving requirement, a delay requirement, an index of the delay requirement, a pre-specified quantity of times of detecting the first channel, an index of a pre-specified quantity of times of detecting the first channel, a mobility requirement, and an index of the mobility requirement.

It should be noted that the terminal device type 1 and the terminal device type 2 in this embodiment of this application may be different terminal types of REDCAP, or the terminal device type 1 may be REDCAP UE, and the terminal device type 2 may be an ordinary terminal device (legacy UE), or other cases. There may also be more than two types. This is not limited herein. In this embodiment of this application, different terminal types whose terminal device type 1 and terminal device type 2 are REDCAP are used as examples for description.

In this embodiment of this application, the first feature information that may be used to represent the terminal device is described as follows.

The bandwidth (channel bandwidth) is a bandwidth supported or configured by the terminal device. Bandwidths of the terminal devices in this embodiment of this application may be different. For example, a bandwidth of the terminal device type 1 is 20 megabits per second (Mbps, M), and a bandwidth of the terminal device type 2 is 100 M. Alternatively, a bandwidth of the terminal device type 1 is 20 M, and a bandwidth of the terminal device type 2 is 10 M.

A quantity of supported or configured resource units, for example, a quantity of resources supported by the terminal device type 1 is 48 RBs, and a quantity of resources supported by the terminal device type 2 is 96 RBs.

The quantity of transmit antennas and/or a quantity of receive antennas specially means that a quantity of transmit antenna ports and/or a quantity of receive antenna ports of the terminal device type 1 is different from that/those of the terminal device type 2. For example, the quantity of transmit antenna ports of the terminal device type 1 is 1, and the quantity of receive antenna ports of the terminal device type 1 is 2; and the quantity of transmit antenna ports of the terminal device type 2 is 2, and the quantity of receive antenna ports of the terminal device type 2 is 4.

The quantity of radio frequency channels specially means that a quantity of radio frequency channels of the terminal device type 1 is different from that of the terminal device type 2. For example, the quantity of radio frequency channels of the terminal device type 1 is 1, and the quantity of radio frequency channels of the terminal device type 2 is 2.

The quantity of HARQ processes specially means that a quantity of HARQ processes supported by the terminal device type 1 is different from that supported by the terminal device type 2. For example, the quantity of HARQ processes supported by the terminal device type 1 is 8, and the quantity of HARQ processes supported by the terminal device type 2 is 16.

The supported peak rate specially means that a maximum peak rate of the terminal device type 1 is different from that of the terminal device type 2. For example, the maximum peak rate supported by the terminal device type 1 is 100 Mbps, and the peak rate supported by the terminal device type 2 is 200 Mbps.

The application scenario specially means that the terminal device type 1 and the terminal device type 2 serve different application scenarios. For example, the terminal device type 1 is applied to industrial wireless sensing, video surveillance, a wearable device, and the like; and the terminal device type 2 is applied to mobile communication, video Internet access, and the like.

The delay requirement specially means that the terminal device type 1 and the terminal device type 2 have different transmission delay requirements. For example, a delay requirement of the terminal device type 1 is 500 milliseconds, and a delay requirement of the terminal device type 2 is 100 milliseconds.

The processing ability specially means that in different SCS conditions, the terminal device type 1 and the terminal device type 2 have different channel or data processing time sequences and processing speeds. For example, the terminal device type 1 does not support a complex operation, and the complex operation includes artificial intelligence (artificial intelligence, AI) and virtual reality (virtual reality, VR) rendering. The terminal device type 2 supports the complex operation. For example, a processing capability of the terminal device type 1 is lower than that of the terminal device type 2. For example, scheduling delays for scheduling a PDSCH or a PUSCH by the PDCCH are different.

The protocol release specially means that the terminal device type 1 and the terminal device type 2 are terminal devices of different protocol releases. For example, a protocol release supported by the terminal device type 1 is Release 17, and a protocol release supported by the terminal device type 2 is Release 15.

The duplex manner (half-duplex and full-duplex), for example, the terminal device type 1 operates in a half-duplex manner, and the terminal device type 2 operates in a full-duplex manner.

The service (an Internet of Things application, such as video surveillance and MBB), for example, a service supported by the terminal device type 1 is video surveillance, and a service supported by the terminal device type 2 is MBB.

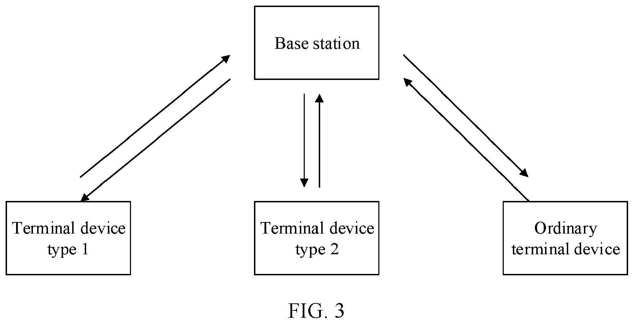

For an actual scenario to which this embodiment is applied, refer to a transmission architecture between a base station and UE shown in FIG. 3. The base station is an eNB or a gNB, and the UE includes a terminal device type 1, a terminal device type 2, and an ordinary terminal device. The base station receives random access requests of the terminal device type 1, the terminal device type 2, and the ordinary terminal device. The terminal device type 1, the terminal device type 2, and the ordinary terminal device access a network, and receive and send data from or to the base station.

Based on a random access architecture and the transmission architecture between the base station and the UE, the following describes the communication method in embodiments of this application.

In this application, the terminal device is a device with a wireless transceiver function, and may be a fixed device, a mobile device, a handheld device (for example, a mobile phone), a wearable device, a vehicle-mounted device, or a wireless apparatus built in the foregoing device (for example, a communication module, a modem, or a chip system). The terminal device is configured to connect people, things, machines, and the like, and may be widely used in various scenarios, for example, including but not limited to the terminal device in the following scenarios: cellular communication, device-to-device communication (device-to-device, D2D), vehicle to everything (vehicle to everything, V2X), machine-to-machine/machine type communication (machine-to-machine /machine type communications, M2M/MTC), internet of things (internet of things, IoT), virtual reality (virtual reality, VR), augmented reality (augmented reality, AR), industrial control (industrial control), self driving (self driving), remote medical (remote medical), smart grid (smart grid), smart furniture, smart office, smart wearables, smart transportation, smart city (smart city), uncrewed aerial vehicles, and robots. The terminal device may sometimes be referred to as user equipment (user equipment, UE), a terminal, an access station, a UE station, a remote station, a wireless communication device, a user apparatus, or the like. For ease of description, UE is used as an example for description of the terminal device in this application.

A network device in this application includes, for example, an access network device and/or a core network device. The access network device is a device having a wireless transceiver function, and is configured to communicate with the terminal device. The access network device includes but is not limited to a base station (BTS, NodeB, eNodeB/eNB, or gNodeB/gNB) in the communication system, a transmission reception point (transmission reception point, TRP), and a base station that is subsequently evolved from 3GPP, an access node, a wireless relay node, a wireless backhaul node, and the like in a Wi-Fi system. The base station may be a macro base station, a micro base station, a picocell base station, a small cell, a relay station, or the like. A plurality of base stations may support the foregoing networks using a same access technology, or may support the foregoing networks using different access technologies. The base station may include one or more co-site or non-co-site transmission reception points. The network device may alternatively be a radio controller, a central unit (central unit, CU), and/or a distributed unit (distributed unit, DU) in a cloud radio access network (cloud radio access network, CRAN) scenario. The network device may alternatively be a server, a wearable device, a vehicle-mounted device, or the like. For example, a network device in a V2X technology may be a road side unit (road side unit, RSU). The following provides descriptions by using an example in which the access network device is a base station. A plurality of network devices in the communication system may be base stations of a same type, or may be base stations of different types. The base station may communicate with a terminal device, or may communicate with a terminal device via a relay station. The terminal device may communicate with a plurality of base stations in different access technologies. The core network device is configured to implement functions such as mobility management, data processing, session management, and policy and charging. Names of devices that implement core network functions in systems of different access technologies may be different. This is not limited in this application. A 5G system is used as an example. The core network device includes an access and mobility management function (access and mobility management function, AMF), a session management function (session management function, SMF), a user plane function (user plane function, UPF), or the like.

It should be noted that processing performed by the terminal device based on a message sent by the network device may be performed by using an adjustment factor, or may not be performed by using an adjustment factor. The following separately describes the processing.

1. The terminal device does not process, by using the adjustment factor, the message sent by the network device.

In this implementation, the terminal device determines, based on access status information, whether to access a network, and determines a first repetition count of a first channel based on a first repetition count set. The access status information indicates whether the terminal device can access the network. When the access status information indicates that the terminal device cannot access the network, the terminal device stops monitoring a PDCCH. When the access status information indicates that the terminal device can access the network, the terminal device performs an operation of determining the first repetition count. Specifically, the access status information may include at least one bit, and a bit status and a bit value indicate whether the terminal device can access the network. For example, when a bit value is 1, it indicates that the terminal device can access the network, and when a bit value is 0, it indicates that the terminal device cannot access the network.

In actual application, the terminal device may determine the access status information, or may not determine the access status information. The details are described as follows.

1. Determine the access status information.

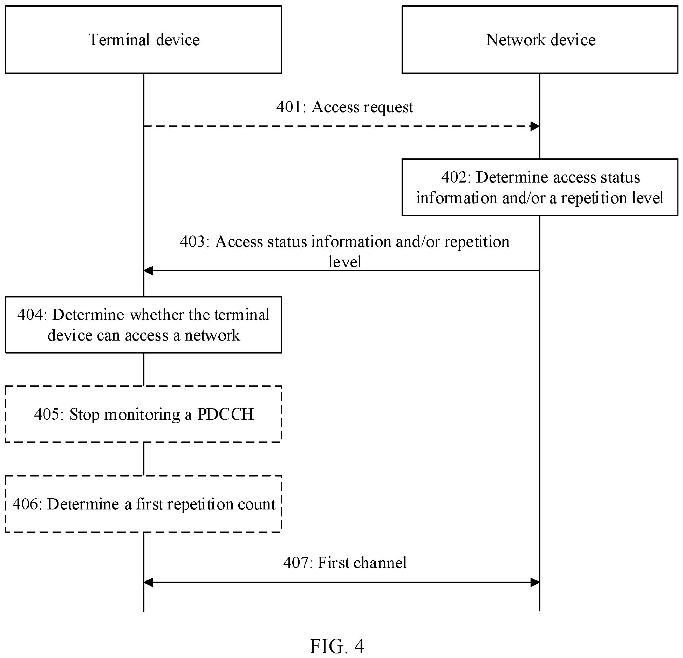

In this embodiment, the terminal device may determine, based on the access status information, whether the terminal device can access the network. Refer to FIG. 4. A procedure of a communication method in this embodiment of this application includes the following steps.

401: A terminal device sends an access request to a network device, and correspondingly, the network device receives the access request from the terminal device.

In this embodiment, in a random access procedure of accessing a network by the terminal device, the terminal device may send the access request to the network device. The request may include first feature information of the terminal device, or may not include the first feature information. This is not limited in this embodiment.

402: The network device determines access status information and repetition level information.

In this embodiment, the network device may determine the access status information in the following four cases.

Case 1: The network device determines a terminal type of the terminal device based on the access request of the terminal device. The terminal type may be determined based on the first feature information. Specifically, the first feature information is a time domain resource and/or a frequency domain resource of a random access sequence of the terminal device. This is not specifically limited herein.

Case 2: After sending the access request, the terminal device may send the first feature information to the network device via a Msg3. Specifically, the first feature information may be a bandwidth of the terminal device, or a quantity of transmit antennas of the terminal device, or a quantity of receive antennas of the terminal device.

Case 3: After the terminal device sends the access request and has accessed a network, the terminal device sends the first feature information through a physical uplink shared channel. For example, the first feature information is a bandwidth of the terminal device, or a quantity of transmit antennas of the terminal device, or a quantity of receive antennas of the terminal device.

Case 4: The network device does not need to determine first information based on the first feature information. The network device determines, based on a load status at this time, whether to allow the terminal device to access the network. For example, when network load is large, that is, a quantity of terminal devices that access the network is large, REDCAP UE or a terminal device of a type is not allowed to access the network. When network load is small, that is, a quantity of terminal devices that access the network is small, REDCAP UE or a terminal device of a type is allowed to access the network.

In the foregoing cases 1 to 4, when the network device determines, based on the first feature information, that the terminal device sending the access request is the REDCAP UE, if the network device does not support the terminal type, for example, the network device may support only legacy UE but does not support the REDCAP UE, it is determined that the terminal device is not allowed to access the network; and if the terminal device is the legacy UE or the network device also supports the REDCAP UE, it is determined that the terminal device is allowed to access the network.

The network device may indicate the terminal device how to report the device type of the terminal device (that is, a downlink indication manner), including: The network device may indicate the terminal device by using a master information block (master information block, MIB), a physical broadcast channel (physical broadcast channel, PBCH), a system information block (system information block, SIB) or PDCCH (the PDCCH is used to schedule a PDSCH carrying a SIB 1). The system information block may be the SIB 1. In other words, indication information of the network device may be carried on the foregoing channel. Indication information of the network device may be indicated by at least one bit carried on the foregoing channel. For example, when two device types need to be indicated, one bit may be used for indication. When three or four device types need to be indicated, two bits may be used for indication. The network device may indicate time domain resources and/or frequency domain resources and/or code domain resources of random access preambles corresponding to different device types. In this case, the network device may identify different device types of terminal devices based on the resources of random access preambles. Alternatively, the network device may indicate the terminal device to use a specific bit or field to report the device type. Alternatively, the network device may indicate that the network device does not need to identify the device type of the terminal device in a random access phase, that is, it indicates that the terminal device does not need to indicate the device type to the network device. Further, the network device may respectively indicate, by using a plurality of pieces of indication information, different reporting manners corresponding to different device types of terminal devices. For example, for four device types of different terminal devices, the network device may respectively indicate, by using four bits in the SIB 1, four reporting manners corresponding to the four device types.

Correspondingly, an indication manner in which the terminal device indicates the device type to the network device (that is, an uplink indication manner) includes: transmission via a Msg1, transmission via a Msg3, transmission via a message A (MsgA), transmission via a message 5 (Msg5), or transmission via a PUSCH carrying UE capability information. The terminal device may indicate the device type by using a correspondence between a transmission resource and a device type, or may indicate the device type by using a specific bit or field. The terminal device may determine a specific indication manner based on a message from the network device, or may determine a specific indication manner according to a predefined rule. For example, the network device indicates, by using MIB, at least one Msg1 resource corresponding to at least one device type. After receiving the MIB, the terminal device may determine a corresponding Msg1 resource based on the MIB and the device type, and send Msg1 to the network device based on the corresponding Msg1 resource. The network device identifies the corresponding device type based on the Msg1 resource. For another example, the network device indicates, by using a PBCH, the terminal device to use one bit in Msg3 message to report the device type. For still another example, a standard predefines that the terminal device reports the device type in MsgA.

It should be understood that the foregoing plurality of downlink indication manners and plurality of uplink indication manners may be mutually combined.

The network device may determine the access status information based on the first feature information, that is, the network device first determines, based on the first feature information, whether the terminal device can access a network. When the terminal device cannot access the network, the network device may set a bit status to indicate that the terminal device is not allowed to access the network. The bit status is the access status information determined by the network device, that is, the bit status is related to the first feature information. In an example, the first feature information may be a device type of the terminal device. When the device type is a terminal device type 1 or a terminal device type 2, if the network device supports only legacy UE and does not support REDCAP UE, the network device may set the bit status to indicate that the terminal device is not allowed to access the network. Specifically, the bit status may be a bit value (bit value). Optionally, there may be a terminal device whose other bit status corresponds to other different first feature information, and indicates whether a terminal device of another device type is allowed to access a network.

In another example, the bit status may also be 0 or 1. If the network device supports only legacy UE and does not support REDCAP UE, when the device type is a terminal device type 1 or a terminal device type 2, the bit status is set to 0. That is, the terminal device is not allowed to access a network. When the device type is the legacy UE, the bit status is set to 1, that is, the terminal device is allowed to access a network. This is not limited in this embodiment.

When the terminal device is not allowed to access the network, information indicated by the repetition level information determined by the network device may be empty, or the repetition level information does not need to be determined in step 402.

When the terminal device is allowed to access the network, the network device may determine, according to a predefined rule, a first repetition count, the repetition level information, and a first maximum repetition count that are corresponding to a first channel. The first channel is a physical channel through which the network device and the terminal device transmit information, and may be a PDCCH. Alternatively, the first channel may be another channel, for example, a PDSCH or a PUSCH.

The first repetition count may be a quantity of sending times of sending the first channel by the network device.

The repetition level information is a reflection of a quantity of possible repetition counts of receiving, by the terminal device, the first channel.

The first maximum repetition count is used to demarcate a selection range of the repetition count with reference to the repetition level information.

The repetition level information may indicate a first repetition count set corresponding to the first channel. The first repetition count set is a set of possible repetition counts for receiving or sending, by the terminal device, and the first repetition count set may include one or more first repetition counts. For example, when the device type of the terminal device is the legacy UE, the repetition level information may be set to a first value. The first value indicates that the first repetition count is 1, or indicates that the first repetition count is a first predefined value. The first predefined value may be a maximum repetition count $R_{max}$, or may be another value. For example, $\frac{R_{max}}{2}$, and this is not specifically limited herein. The first value may be set to 1 or another value. This is not specifically limited herein.

In a possible example, repetition level information of the terminal device type 1 may be set to a second value, for example, 4, indicating that a first repetition count set corresponding to the terminal device of the device type includes four repetition counts. For example, the four repetition counts may be $R_{max}$, $\max\{\frac{R_{max}}{2},1\}$, $\max\{\frac{R_{max}}{4},1\}$, $\max\{\frac{R_{max}}{8},1\}$. Then, the network device may configure first indication information (for example, DCI) to indicate the first repetition count in the four repetition counts. Repetition level information of the terminal device type 2 may be set to a third value, for example, 2, indicating that a first repetition count set corresponding to the terminal device of the device type includes two repetition counts. For example, the two repetition counts may be $R_{max}$, and $\max\{\frac{R_{max}}{2},1\}$. Then, the network device may configure the first indication information (for example, the DCI) to indicate the first repetition count in the two repetition counts.

When the access status information indicates that the terminal device is not allowed to access the network, the first information in this embodiment of this application includes only the access status information, or the first information includes the access status information and the repetition level information, and information indicated by the repetition level information is empty. When the access status information indicates that the terminal device is allowed to access the network, the first information includes the access status information, the repetition level information, and the first maximum repetition count. In this case, the first information may also be carried by a plurality of messages, for example, the access status information, the repetition level information, and the first maximum repetition count are separately carried.

403: The network device sends the access status information and/or the repetition level information to the terminal device, and correspondingly, the terminal device receives the access status information and/or the repetition level information from the network device.

After the network device determines the access status information and the repetition level information, the network device sends, to the terminal device, the first information that includes the access status information and the repetition level information. Optionally, when the terminal device is not allowed to access the network, the repetition level information is empty, or the network device sends only the access status information to the terminal device.

404: The terminal device determines whether the terminal device can access the network, and if the terminal device can access the network, step 406 is performed, or if the terminal device cannot access the network, step 405 is performed.

The terminal device may determine the access status information based on the received first information, and determine, based on the access status information, whether the terminal device can access the network. For example, when a bit status in the first information is 1, it may indicate that the terminal device can access the network, or when a bit status is 0, it may indicate that the terminal device cannot access the network. Alternatively, when the bit status has a value, it indicates that the terminal device can access the network. When the bit status has no value, the terminal device cannot access the network. This is not specifically limited herein.

405: The terminal device determines that the terminal device cannot access the network.

After the terminal device determines the access status information, if the access status information indicates that the terminal device is not allowed to access the network, the terminal device determines that the terminal device cannot access the network, and stops monitoring information transmitted by the network device through a physical channel.

406: The terminal device determines a first repetition count.

After determining that the terminal device can access the network, the terminal device may determine the repetition level information and the first maximum repetition count based on the first information, and determine the first repetition count of the first channel based on the repetition level information. For example, when the repetition level information is 1, the terminal device does not need to blindly detect the PDCCH. The terminal device may determine that the first repetition count is 1 or the first predefined value. When the repetition level information is 2 or 4, the terminal device may determine the first repetition count set based on the repetition level information and the first maximum repetition count. In this case, the terminal device needs to blindly detect the PDCCH to obtain first indication information (for example, the DCI) to determine the first repetition count in the first repetition count set.

407: The terminal device transmits the first channel.

After determining the first repetition count, the terminal device may receive the first channel based on the first repetition count. For example, when the first channel is a PDCCH, the network device sends the PDCCH based on the first repetition count. Specifically, a time sequence in which the network device sends the PDCCH is not limited, and the terminal device receives the PDCCH based on the first repetition count. The PDCCH may be a PDCCH for scheduling a system information block (system information block, SIB), a PDCCH for scheduling a PDSCH carrying an RAR, or a PDCCH for scheduling a PDSCH carrying a Msg4, or a PDCCH for scheduling another PDSCH carrying downlink data. When the first channel is the PDSCH, the terminal device receives, based on the first repetition count, the PDSCH or another PDSCH that carries the downlink data. The PDSCH may be a PDSCH carrying a SIB, or a PDSCH carrying an RAR, or a PDSCH carrying the Msg4. When the first channel is the PUSCH, a step performed in step 407 may alternatively be that the UE sends the PUSCH based on the first repetition count. The PUSCH may be a PUSCH carrying a Msg3, or another PUSCH carrying uplink data. This is not specifically limited herein.

In this embodiment of this application, the terminal device may determine, based on the access status information sent by the network device, whether the terminal device can access the network, to avoid a waste of network resources because the terminal device still monitors the first channel when accessing the network is not supported, thereby saving network resources and improving communication efficiency.

Further, the terminal device determines the first repetition count based on the repetition level information to reduce complexity of blind detection.

2. The network device does not need to send the access status information to the terminal device.

In actual application, the network device may not send the access status information to the terminal device. The access status information may be indicated by other information in the first information, and indicates a repetition count set. Alternatively, the network device may not limit a type of the terminal device, that is, different terminal devices can access the network. The network device may send, to the terminal device, the first information that directly includes the repetition count set. Details are separately described in the following.

2.1. The network device indicates the repetition count set to the terminal device by using the first information.

In this embodiment, the terminal device may determine the first repetition count set based on the repetition level information in the first information, or may determine the first repetition count set based on the first feature information in the first information.

2.1.1. The network device indicates, to the terminal device by using the repetition level information, whether the terminal device can access the network and the first repetition count set, and this reduces use of the access status information and saves network resources.

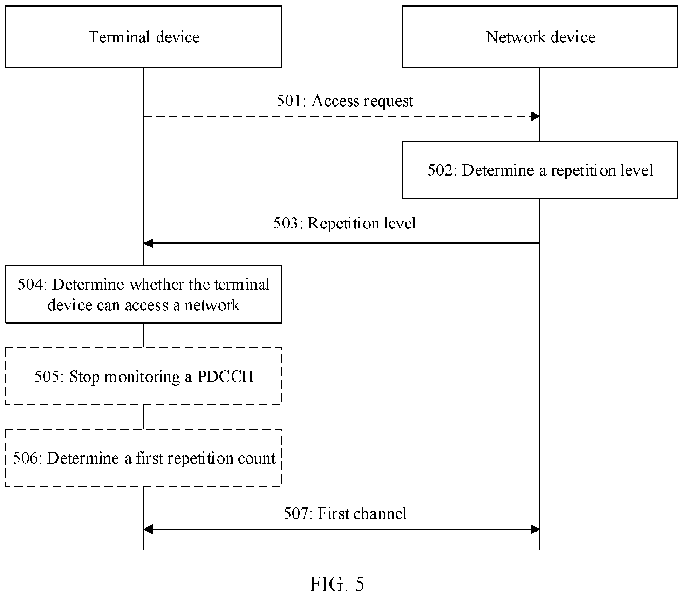

Refer to FIG. 5. Another procedure of a communication method in this embodiment includes the following steps.

501: The terminal device sends the access request to the network device, and correspondingly, the network device receives the access request from the terminal device.

For step 501 in this embodiment, refer to step 401 in the embodiment shown in FIG. 4. Details are not described herein again.

502: The network device determines the repetition level information.

This embodiment may be based on the four cases in step 402 in the embodiment shown in FIG. 4, and a same indication method of a terminal type is used. Details are not described herein again.

In this embodiment, whether the network device allows the terminal device to access the network does not need to be indicated by the access status information, and may be directly indicated by the repetition level information. For example, when the network device does not allow the terminal device to access the network, the network device may set the repetition level information to a fourth value. The fourth value may be a predefined value, for example, 0, or an invalid repetition level value is reused, to indicate that the network device does not allow the terminal device to access the network.

When the terminal device is allowed to access the network, the network device may determine, according to the predefined rule, the first repetition count, the repetition level information, and the first maximum repetition count that are corresponding to the first channel.

For other values of the repetition level information, refer to related descriptions in step 402 in the embodiment shown in FIG. 4. Details are not described herein again.

503: The network device sends the repetition level information to the terminal device, and correspondingly, the terminal device receives the repetition level information from the network device.

The network device sends, to the terminal device, the first information that includes the determined repetition level information.

504: The terminal device determines whether the terminal device can access the network, and when the terminal device can access the network, step 506 is performed, or when the terminal device cannot access the network, step 505 is performed.

The terminal device obtains the repetition level information based on the received first information, and determines, based on a value of the repetition level information, whether the terminal device can access the network. For example, when the repetition level information is a value 0, the terminal device may determine not to be allowed to access the network, and perform step 505. When the repetition level information is another value, the terminal device determines that the terminal device can access the network, and performs step 506.

505: The terminal device stops monitoring the PDCCH.

506: The terminal device determines the first repetition count.

507: The terminal device transmits the first channel.

For steps 505 to 507 in this embodiment, refer to related descriptions of steps 405 to 407 in the embodiment shown in FIG. 4. Details are not described herein again.

In this embodiment of this application, the terminal device may determine, based on the access status information sent by the network device, whether the terminal device can access the network, to avoid a waste of resources because the terminal device still monitors the first channel when accessing the network is not supported; alternatively, determine the first repetition count for transmitting the first channel based on the received repetition count set, to improve network configuration flexibility.

Further, the terminal device indicates, by using the repetition level information, whether the terminal device can access the network, and this reduces information exchange, saves network resources, and improves communication efficiency.

2.1.2. The network device indicates the first repetition count to the terminal device by using second feature information, and the terminal device can obtain the first repetition count for receiving the first channel without blind detection, and this saves network resources.

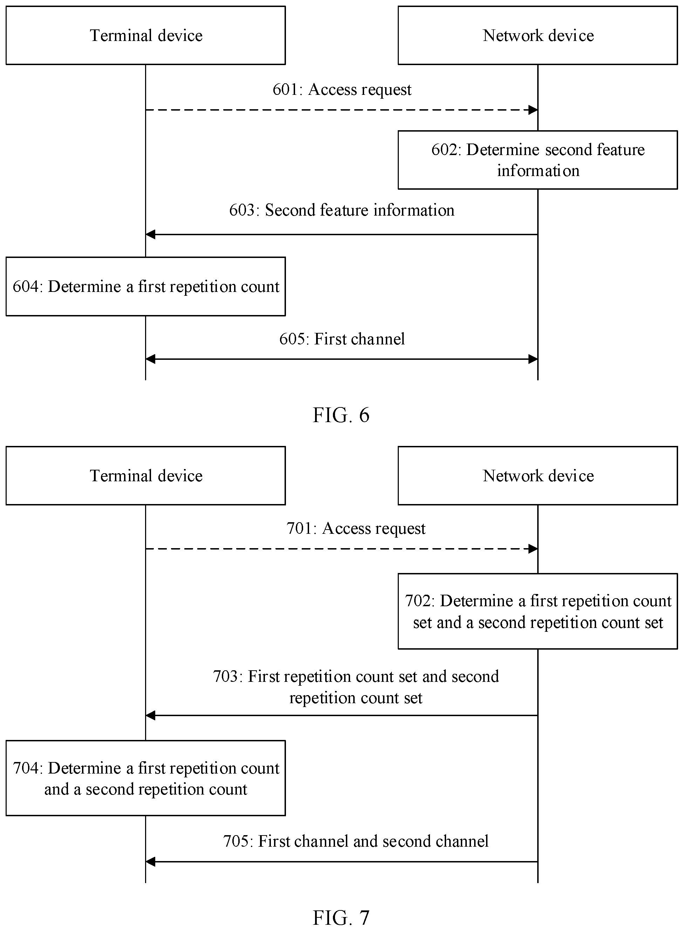

Refer to FIG. 6. Another procedure of a communication method in this embodiment includes the following steps.

601: The terminal device sends the access request to the network device, and correspondingly, the network device receives the access request from the terminal device.

For step 601 in this embodiment, refer to related descriptions of step 401 in the embodiment shown in FIG. 4. Details are not described herein again.

602: The network device determines the second feature information.

After receiving the access request, the network device may determine the second feature information corresponding to the terminal device. The second feature information is information used by the network device to indicate a device type of the terminal device to the terminal device. For the second feature information, refer to a specific parameter included in the first feature information.

This embodiment may be implemented based on a premise of four cases in step 402 in the embodiment shown in FIG. 4 and an indication method of a terminal type. Details are not described herein again.

In this embodiment, the first channel may be a PDCCH, or may be another channel, for example, a PDSCH or a PUSCH. This is not specifically limited herein. The second feature information is used as an example in this embodiment. When the network device allows the terminal device to access the network, the first repetition count of the first channel is related to the second feature information. For example, when the device type of the terminal device is the legacy UE, the first repetition count may be 1 or the first predefined value. When the device type of the terminal device is the terminal device type 1, the first repetition count may be 16. When the device type of the terminal device is the terminal device type 2, the first repetition count may be 4. The foregoing value is merely an example, and is not specifically limited herein.

For example, the second feature information may be aggregation level information. The aggregation level information indicates an aggregation level (Aggregation level), candidate control channel information indicates a candidate PDCCH quantity, the aggregation level includes {1, 2, 4, 8, 16}, and a candidate PDCCH quantity corresponding to the aggregation level, and a PDCCH repetition count is associated with the aggregation level and/or the candidate PDCCH quantity. For example, a repetition count associated with an aggregation level 16 is N, and a repetition count associated with an aggregation level 8 is 2N, and a repetition count associated with an aggregation level 4 is 4N...; association between the repetition count and the candidate PDCCH quantity includes: For example, in Table 5, a first column is an aggregation level, a second column is a candidate PDCCH quantity corresponding to different aggregation levels, and the candidate PDCCH quantities corresponding to the aggregation levels 1, 2, 4, 8, and 16 include (n0, n1, n2, n3, n4, n5, n6, n8), where n0, n1, n2, n3, n4, n5, n6, and n8 may correspond to candidate PDCCH quantities 0, 1, 2, 3, 4, 5, 6, and 8. Alternatively, n0, n1, n2, n3, n4, n5, n6, and n8 may correspond to different positive integers. In this embodiment, a specific association manner may be set. For example, an aggregation level corresponds to one repetition count. For example, a repetition count corresponding to an aggregation level 1 is m1, or a repetition count corresponding to an aggregation level 2 is m2, where m1, and m2 are positive integers. Alternatively, different candidate PDCCH quantities may correspond to one repetition count. For example, a larger candidate PDCCH quantity indicates a smaller repetition count, a candidate PDCCH quantity n8 corresponds to a repetition count 1, and a candidate PDCCH quantity n1 corresponds to a repetition count 8. Specifically, the association relationship may be preconfigured on the network device and the terminal device, or may be configured in another manner. For example, the network device notifies the terminal device via an RRC message. This is not specifically limited herein. For example, the association relationship may be determined based on the first feature information or the second feature information.

**Table 5**

| Aggregation level | Candidate PDCCH quantities |
|---|---|
| Aggregation level 1 | n0, n1, n2, n3, n4, n5, n6, n8, |
| Aggregation level 2 | n0, n1, n2, n3, n4, n5, n6, n8, |
| Aggregation level 4 | n0, n1, n2, n3, n4, n5, n6, n8, |
| Aggregation level 8 | n0, n1, n2, n3, n4, n5, n6, n8, |
| Aggregation level 16 | n0, n1, n2, n3, n4, n5, n6, n8, |

603: The network device sends the second feature information to the terminal device, and correspondingly, the terminal device receives the second feature information from the network device.

After determining the aggregation level information or the candidate control channel information based on the first repetition count, the network device sends the aggregation level information or the candidate control channel information to the terminal device by using the second feature information, and the terminal device receives the second feature information.

604: The terminal device determines the first repetition count.

After receiving the second feature information, the terminal device may determine the first repetition count based on a preconfigured association relationship. The association relationship may indicate one of a quantity of candidate PDCCHs corresponding to the second feature information and the second feature information. For example, the second feature information is the aggregation level information or the candidate control channel information. The terminal device selects, based on the preconfigured association relationship, a corresponding first repetition count from the quantity of candidate PDCCHs corresponding to the aggregation level information or the candidate control channel information, where the aggregation level information or the candidate control channel may be indicated by the network device to the terminal device by using higher layer signaling or physical layer signaling. The higher layer signaling may be RRC signaling or a media access control control element (media access control control element, MAC CE), and the physical layer signaling may be DCI. This is not specifically limited herein.

605: The terminal device transmits the first channel.

For step 605 in this embodiment, refer to related descriptions of step 407 in the embodiment shown in FIG. 4. Details are not described herein again.

In this embodiment, the terminal device obtains the first repetition count of the first channel by matching the second feature information sent by the network device with the association relationship, and does not need to blindly detect the PDCCH, and this reduces usage of the DCI, improves a network access processing speed, and reduces DCI overheads. At the same time, network resources can be saved and communication efficiency can be improved.

2.2. The network device sends, to the terminal device, the first information that directly includes the repetition count set.

In this embodiment, the network device directly sends the repetition count set to the terminal device. Specifically, in the repetition count indicated by the repetition count set, a repetition count of the PDCCH may be associated with a repetition count of the PDSCH, or may be associated with a repetition count of the PUSCH.

2.2.1. There is an association relationship between the repetition count of the PDCCH and the repetition count of the PDSCH. The terminal device may determine the repetition count of the PDSCH based on the repetition count of the PDCCH, or determine the repetition count of the PDCCH based on the repetition count of the PDSCH, to reduce network resources occupied by indication information of the PDSCH or the PDCCH.

Refer to FIG. 7. Another procedure of a communication method in this embodiment includes the following steps.

701: The terminal device sends the access request to the network device, and correspondingly, the network device receives the access request from the terminal device.

For step 701 in this embodiment, refer to related descriptions of step 401 in the embodiment shown in FIG. 4. Details are not described herein again.

702: The network device determines the first repetition count set and a second repetition count set.

This embodiment may be implemented based on a premise of four cases in step 402 in the embodiment shown in FIG. 4 and an indication method of a terminal type. Details are not described herein again.

In a possible implementation, the first repetition count of the first channel is associated with the first feature information of the terminal device. For example, the first feature information is a device type. When the network device allows the terminal device to access the network, if the device type of the terminal device is the legacy UE, the network device may determine that the first repetition count is 1 or the first predefined value. When the device type of UE is the terminal device type 1, the network device may determine that the first repetition count is 16. When the device type of the terminal device is the terminal device type 2, the network device may determine that the first repetition count is 4. The foregoing value is merely an example, and is not specifically limited herein. A manner of determining a second repetition count of the second channel is the same as that of determining the first repetition count, and details are not described herein again. However, there may be a linear operation relationship between the second repetition count and the first repetition count.

After determining the first repetition count and the second repetition count, the network device may determine, according to a predefined rule or table or based on received access requests of a plurality of terminal devices, the first repetition count set corresponding to the first repetition count and the second repetition count set corresponding to the second repetition count. Optionally, the network device may alternatively determine the first repetition count set or the second repetition count set based on the first feature information.

703: The network device sends the first repetition count set and the second repetition count set to the terminal device, and correspondingly, the terminal device receives the first repetition count set and the second repetition count set that are from the network device.

After determining the first repetition count set and the second repetition count set, the network device may send the first repetition count set and the second repetition count set to the terminal device via an RRC message. When the second repetition count set has only one repetition count, the repetition count is a first parameter. When the second repetition count set includes a plurality of repetition counts, the terminal device may select one repetition count in the second repetition count set as the first parameter by using first indication information sent by the network device.

704: The terminal device determines the first repetition count and the second repetition count.

When the first repetition count set indicates one maximum repetition count, the terminal device may determine, according to a predefined rule or table, a plurality of repetition counts indicated by the maximum repetition count, and determine the first repetition count from the plurality of repetition counts based on the first indication information. When the first repetition count set indicates a plurality of repetition counts, the terminal device may directly determine the first repetition count based on the first indication information, and then obtain the second repetition count by using a linear operation algorithm based on the first repetition count and the second repetition count set. Specifically, when the second repetition count set includes only one repetition count, the repetition count is the first parameter, and the second repetition count may be directly calculated based on the first repetition count. When the second repetition count set includes a plurality of repetition counts, the terminal device may first indicate the first parameter in the second repetition count set by using 1-bit data in the first indication information, and then obtain the second repetition count by linear calculation based on the first parameter and the first repetition count.

For example, when the second repetition count set includes only one repetition count, the first indication information, for example, DCI, indicates a first PDCCH repetition count X, and the network device indicates a PDSCH first parameter Y to the terminal device through the RRC message. In this case, a second repetition count of the PDSCH may be determined based on X and Y, and may be determined through addition, multiplication, or another linear operation relationship. For example, if a first repetition count of the PDCCH indicated in the DCI is 2, and the network device indicates, to the terminal device via the RRC message, that the first parameter of the PDSCH is 4, the second repetition count of the PDSCH may be 2 x 4 = 8. When the second repetition count set includes a plurality of repetition counts, the first repetition count of the PDCCH indicated in the DCI is 2, and the network device indicates, to the terminal device via the RRC message, that a second repetition count set of the PDSCH is {1, 2, 4, 8}, the terminal device may first indicate the first parameter in the second repetition count set by using the DCI, and then multiply the first parameter by the first repetition count, or may first multiply the second repetition count by the first repetition count, and obtain a union set from the second repetition count set. In this case, an actual repetition count set of the PDSCH may be { 1, 2, 4, 8, 16}, and then the terminal device indicates a value in the actual repetition count set by using the DCI to obtain the second repetition count. Specifically, the first channel may be the PDCCH, and the second channel may be the PDSCH; or the first channel may be the PDSCH, and the second channel may be the PDCCH. This is not specifically limited herein.

The linear operation relationship indicates a relationship between a PDSCH repetition count set or a PDSCH repetition count and one or more of a PDCCH aggregation level, a device type of a terminal device supported by the network device, or a capability (for example, a quantity of receive antennas) of a terminal device supported by the network device. For example, the repetition count of the PDSCH is related to the device type of the terminal device supported by the network device. For a terminal device of the terminal device type 1, a repetition count of the PDSCH is large, and for a terminal device of the terminal device type 2, a repetition count of the PDSCH is small. The legacy UE corresponds to a smaller repetition count. Alternatively, if an aggregation level of the PDCCH is large, decoding performance of the PDCCH is good, and coverage is good. In this case, the repetition count of the PDSCH may be a smaller repetition count. In conclusion, the linear operation algorithm can be adjusted adaptively.

705: The network device sends the first channel and the second channel to the terminal device, and correspondingly, the terminal device receives the first channel and the second channel from the network device.

In this embodiment, the terminal device receives the PDCCH based on the determined first repetition count and receives the PDSCH based on the second repetition count, or receives the PDSCH based on the first repetition count and receives the PDCCH based on the second repetition count.

In this embodiment, the network device indicates, to the terminal device, the repetition count of the first channel and the repetition count of the second channel by using the DCI, only the repetition count of one channel needs to be indicated, or bit data required for indicating the second repetition count is less, so that network resources can be saved and communication efficiency can be improved.

2.2.2 The repetition count of the PDCCH is associated with the repetition count of the PUSCH

The terminal device may determine, based on the PDCCH, the repetition count of the PUSCH based on a possible association relationship between the repetition count of the PDCCH and the repetition count of the PUSCH, or determine the repetition count of the PDCCH based on the repetition count of the PUSCH, and reduce network resources occupied by indication information of the PUSCH or the PDCCH.

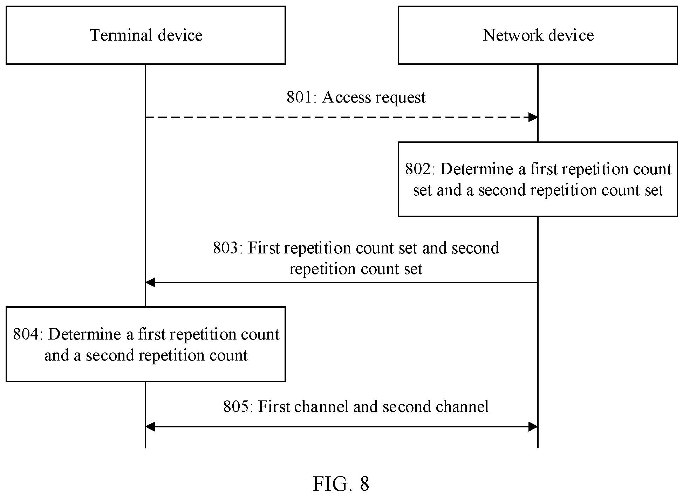

Refer to FIG. 8. Another procedure of a communication method in this embodiment includes the following steps.

801: The terminal device sends the access request to the network device, and correspondingly, the network device receives the access request from the terminal device.

802: The network device determines the first repetition count set and the second repetition count set.

803: The network device sends the first repetition count set and the second repetition count set to the terminal device, and correspondingly, the terminal device receives the first repetition count set and the second repetition count set that are from the network device.

For steps 801 to 803 in this embodiment, refer to related descriptions of steps 701 to 703 in the embodiment shown in FIG. 7. Details are not described herein again.

804: The terminal device determines the first repetition count and the second repetition count.

For determining the first repetition count and the second repetition count, refer to the determining manner in step 704 in the embodiment shown in FIG. 7. Details are not described herein again.

For example, the first channel may be the PDCCH, and the second channel may be the PUSCH; or the first channel may be the PUSCH, and the second channel may be the PDCCH. This is not specifically limited herein.

805: The terminal device transmits the first channel and the second channel.

In this embodiment, when the first channel is the PDCCH, and the second channel is the PUSCH, the terminal device may receive the PDCCH based on the first repetition count, and send the PUSCH based on the second repetition count.

In another example, when the first channel is the PUSCH, and the second channel is the PDCCH, the terminal device may alternatively send the PUSCH based on the first repetition count, and receive the PDCCH based on the second repetition count. This is not specifically limited herein.

In this embodiment, the network device indicates, to the terminal device, the repetition count of the first channel and the repetition count of the second channel by using the DCI, only the repetition count of one channel needs to be indicated, or bit data required for indicating the second repetition count is less, so that network resources can be saved and communication efficiency can be improved.

2. The terminal device processes the first maximum repetition count or the first repetition count set from the network device by using an adjustment factor, to determine the actual first repetition count for receiving the first channel, and this reduces computing resources occupied when a base station obtains the device type of the terminal device.

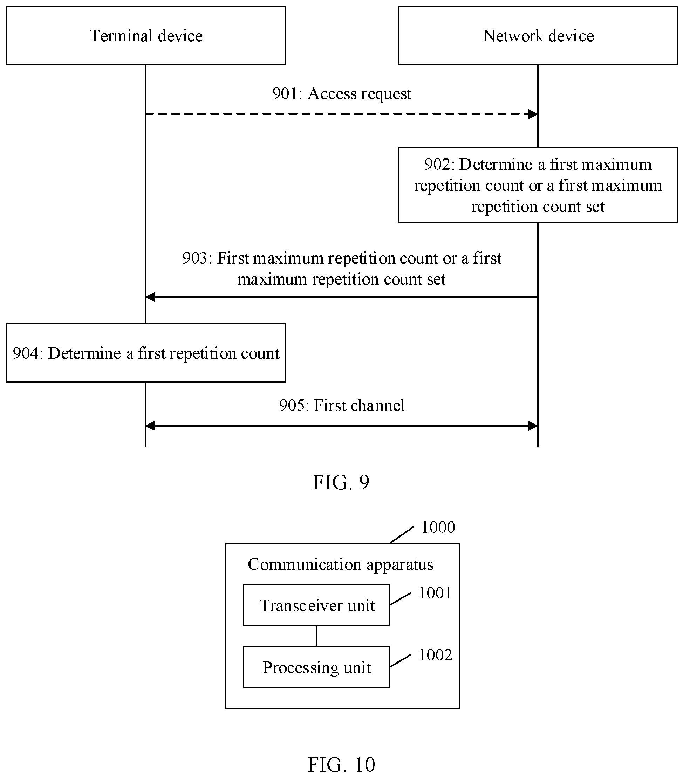

Refer to FIG. 9. Another procedure of a communication method in this embodiment includes the following steps.

901: The terminal device sends the access request to the network device, and correspondingly, the network device receives the access request from the terminal device.

For step 901 in this embodiment, refer to related descriptions of step 401 in the embodiment shown in FIG. 4. Details are not described herein again.

902: The network device determines the first maximum repetition count or the first repetition count set.

This embodiment may be implemented based on a premise of four cases in step 402 in the embodiment shown in FIG. 4 and an indication method of a terminal type. Details are not described herein again.

In this embodiment, when the network device determines that the terminal device is allowed to access the network, the first repetition count of the first channel is associated with the device type. The first channel may be a PDCCH, or may be another channel, for example, a PDSCH or a PUSCH. This is not specifically limited herein. For example, when the device type of the terminal device is legacy UE, the first repetition count may be 1 or a first predefined value. When the device type of the terminal device is the terminal device type 1, the first repetition count may be 16. When the device type of the terminal device is the terminal device type 2, the first repetition count may be 4. The foregoing value is merely an example, and is not specifically limited herein.

After determining the first repetition count, the network device may determine, based on the first repetition count, the second maximum repetition count or the second repetition count set corresponding to the terminal device.

Optionally, the network device may alternatively determine the first maximum repetition count or the first repetition count set based on the second feature information.

903: The network device sends the first repetition count and the first repetition count set to the terminal device, and correspondingly, the terminal device receives the first maximum repetition count or the first repetition count set that are from the network device.

The first maximum repetition count or the second repetition count set may be configured by using higher layer signaling or physical layer signaling, for example, RRC signaling, or a MAC CE, or physical layer signaling, for example, DCI.

904: The terminal device determines the first repetition count based on the adjustment factor.

After receiving the first maximum repetition count or the first repetition count set, the terminal device may determine, based on the adjustment factor, the first repetition count from the first maximum repetition count or the first repetition count set. In an example, after receiving the first maximum repetition count from the network device, the terminal device may adjust the first maximum repetition count based on the adjustment factor, to obtain a second maximum repetition count actually corresponding to the terminal device. The terminal device obtains a plurality of possible repetition counts based on the second maximum repetition count according to a predefined rule or table, and then determines the first repetition count from the plurality of possible repetition counts based on the first indication information from the network device. The first indication information may be the physical layer signaling or the higher layer signaling. The physical layer may be the DCI, and the higher layer signaling may be the RRC or the MAC CE. The network device may preconfigure the adjustment factor for the terminal device by using the higher layer signaling, or may predefine the adjustment factor in a protocol between the network device and the terminal device, or may indicate the adjustment factor to the terminal device by using the physical layer signaling, or may enable the terminal device to determine the adjustment factor by using the first feature information.

In another example, after receiving the first repetition count set sent by the network device, the terminal device may adjust the first repetition count set based on the adjustment factor, to obtain a second repetition count set actually corresponding to the terminal device. The terminal device may determine, based on first indication information sent by the network device, the first repetition count from the second repetition count set.

For example, the first maximum repetition count or the first repetition count set of the legacy UE that is included in the RRC message sent by the network device is used as an example. An adjustment factor of the terminal device type 1 may be configured to 4, and an adjustment factor of the terminal device type 2 may be configured to 2, and the adjustment factor of the legacy UE is 1 or is not set. The terminal device may apply the adjustment factor of each terminal type to the first maximum repetition count of the legacy UE. For example, if the first maximum repetition count is 8, a maximum repetition count of the terminal device type 1 is 32, a maximum repetition count of the terminal device type 2 is 16, and a maximum repetition count of the legacy UE is 8. After obtaining the maximum repetition count, the terminal device may obtain the repetition count set through table-walking, and then indicate the first repetition count based on the first indication information, for example, the DCI. The adjustment factor may also be applied to the first repetition count set. A repetition count set of the legacy UE is { 1, 2, 4, 8}, and a repetition count set of the terminal device type 2 is {2, 4, 8, 16}, and a repetition count set of the terminal device type 1 is {4, 8, 16, 32}. In this example, the adjustment factor of the terminal device type 1 or the terminal device type 2 may also be 1. If the adjustment factor is not indicated or is not configured, the adjustment factor is 1 by default.

The adjustment factor is configured by the network device for the terminal device by using higher layer signaling or physical layer signaling, where the higher layer signaling may include an RRC message or a MAC CE, and the physical layer signaling is the first indication information such as the DCI, or the foregoing adjustment factor is predefined by the network device, or the adjustment factor is related to the first feature information. For example, the adjustment factor may be indicated by using the DCI. For example, 1 or 2 bits in the DCI indicate a value of an adjustment factor in an adjustment factor set, and the adjustment factor set may be configured by using RRC signaling. Alternatively, the adjustment factor is a value in the repetition count set of the legacy UE, a value in the repetition count set of the terminal device type 1, or a value in the repetition count set of the terminal device type 2. For example, the adjustment factor may be indicated by using the RRC. For example, RRC signaling configures a value in an adjustment factor set, where the adjustment factor set may be predefined, or RRC signaling configures a value in the repetition count set of the legacy UE as the adjustment factor. Alternatively, the RRC signaling configures a value in the repetition count set of the terminal device type 1 as the adjustment factor, or the RRC signaling configures a value in the repetition count set of the terminal device type 2 as the adjustment factor. For example, the adjustment factor is determined based on the first feature information. If the first feature information of the terminal device type 1 is different from that of the terminal device type 2, different adjustment factors are defined. For example, an adjustment factor of a terminal device with one receive antenna is greater than an adjustment factor of a terminal device with two receive antennas, and an adjustment factor of a terminal device with a strong receiving capability is less than an adjustment factor of a terminal device with a weak receiving capability. That is, a quantity of repetitions of the terminal device with a strong receiving capability is less than a quantity of repetitions of the terminal device with a weak receiving capability.

905: The terminal device transmits the first channel.

For step 905 in this embodiment, refer to related descriptions of step 407 in the embodiment shown in FIG. 4. Details are not described herein again.

In this embodiment of this application, the terminal device adjusts, by using the adjustment factor, the first maximum repetition count or the first repetition count set sent by the network device, to obtain the first repetition count of the first channel corresponding to the terminal device, and this improves network configuration flexibility.

The following describes a communication apparatus in an embodiment of this application. Refer to FIG. 10. In the embodiment of this application, a structure of a communication apparatus 1000 includes:

a transceiver unit 1001, configured to: receive first information from a network device, determine a first repetition count of a first channel based on a first repetition count set, and transmit the first channel based on the first repetition count; and

a processing unit 1002, configured to: determine access status information and/or the first repetition count set of the first channel based on the first information, where the first repetition count set includes at least one repetition count, and determine, based on the access status information, whether to access a network.

In this embodiment, the access status information is determined based on a bit status in the first information, the bit status indicates that a terminal device is not allowed to access the network, and the bit status is related to first feature information of the terminal device.

In this embodiment, the first information includes repetition level information, and the processing unit 1002 is specifically configured to:

determine the first repetition count set based on the repetition level information.

In this embodiment, the transceiver unit 1001 is specifically configured to:

determine the first repetition count based on a first maximum repetition count and the first repetition count set, where the first maximum repetition count is configured by using a radio resource control message.

In this embodiment, the repetition level information includes a first value, and the first value indicates that the first repetition count is 1, or indicates that the first repetition count is a first predefined value.

In this embodiment, the first information includes second feature information, the second feature information is used to determine the first repetition count set, and the second feature information is related to the first repetition count.

In this embodiment, the first information is carried in a radio resource control message.

The transceiver unit 1001 is specifically configured to:

determine the first repetition count based on first indication information and the first repetition count set, where the first indication information is from the network device.

In this embodiment, the transceiver unit 1001 is further configured to:

determine a second repetition count of a second channel based on the first repetition count and a first parameter, where the first parameter is from the network device; and

the first channel is a physical downlink control channel, and the second channel is a physical downlink shared channel; or

the first channel is a physical downlink shared channel, and the second channel is a physical downlink control channel; or

the first channel is a physical downlink control channel, and the second channel is a physical uplink shared channel; or

the first channel is a physical uplink shared channel, and the second channel is a physical downlink control channel.

In this embodiment, the transceiver unit 1001 is further configured to:

perform a linear operation on the first repetition count and the first parameter to obtain the second repetition count.

In this embodiment, the communication apparatus may perform operations performed by the terminal device in the embodiments shown in FIG. 4 to FIG. 8. Details are not described herein again.

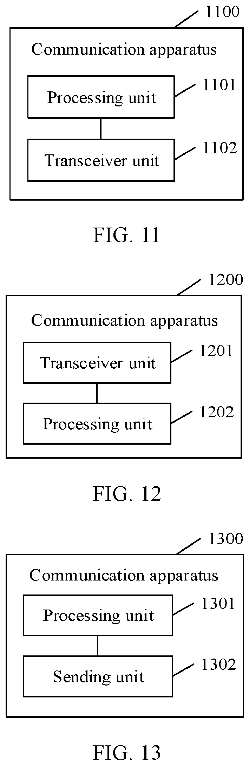

The following describes a communication apparatus in an embodiment of this application. Refer to FIG. 11. In the embodiment of this application, another structure of a communication apparatus 1100 includes:

a processing unit 1101, configured to determine first feature information of a terminal device; and

a transceiver unit 1102, configured to send first information to the terminal device based on the first feature information, and transmit a first channel based on a first repetition count, where the first information indicates access status information and/or a first repetition count set of the first channel, the first repetition count set includes at least one repetition count, and the first repetition count is determined based on the first feature information.

In this embodiment, the access status information is determined based on a bit status in the first information, the bit status indicates that a terminal device is not allowed to access the network, and the bit status is related to first feature information of the terminal device.

In this embodiment, the first information includes repetition level information and a first maximum repetition count, where the repetition level information indicates the first repetition count set, and the first maximum repetition count is determined based on the first feature information.

In this embodiment, the repetition level information includes a first value, and the first value indicates that the first repetition count is 1, or indicates that the first repetition count is a first predefined value.

In this embodiment, the first information includes second feature information, the second feature information is used to determine the first repetition count set, and the second feature information is related to the first repetition count.

In this embodiment, the transceiver unit 1102 is further configured to:
determine first indication information based on the first feature information, where the first indication information is used to determine the first repetition count.

In this embodiment, the first information further includes a first parameter, and the first parameter is used to determine a second repetition count of a second channel; and

the first channel is a physical downlink control channel, and the second channel is a physical downlink shared channel; or
the first channel is a physical downlink shared channel, and the second channel is a physical downlink control channel; or
the first channel is a physical downlink control channel, and the second channel is a physical uplink shared channel; or
the first channel is a physical uplink shared channel, and the second channel is a physical downlink control channel.

In this embodiment, the communication apparatus may perform operations performed by the network device in the embodiments shown in FIG. 4 to FIG. 8. Details are not described herein again.

Refer to FIG. 12. In an embodiment of this application, another structure of a terminal device 1200 includes:

a transceiver unit 1201, configured to: receive a first maximum repetition count or a first repetition count set from a network device, where the first repetition count set includes at least one repetition count, and transmit a first channel based on the first repetition count; and
a processing unit 1202, configured to determine the first repetition count of the first channel based on the first maximum repetition count or the first repetition count set and an adjustment factor.

In this embodiment, the processing unit 1202 is specifically configured to:

determine a second maximum repetition count based on the first maximum repetition count and the adjustment factor; and
determine the first repetition count based on the second maximum repetition count and first indication information, where the first indication information is from the network device.

In this embodiment, the processing unit 1202 is specifically configured to:

determine a second repetition count set based on the first repetition count set and the adjustment factor; and
determine the first repetition count based on the second repetition count set and first indication information, where the first indication information is from the network device.

In this embodiment, the adjustment factor is preconfigured by the network device by using higher layer signaling; or

the adjustment factor is predefined by the network device; or
the adjustment factor is indicated by the network device by using physical layer signaling; or
the adjustment factor is related to first feature information.

In this embodiment, the communication apparatus may perform operations performed by the terminal device in the embodiments shown in FIG. 9. Details are not described herein again.

Refer to FIG. 13. In an embodiment of this application, another structure of a communication apparatus 1300 includes:

a processing unit 1301, configured to determine a device type of a terminal device; and

a sending unit 1302, configured to: send, based on the device type, a first maximum repetition count or a first repetition count set to the terminal device, and transmit a first channel based on a first repetition count, where the first repetition count is determined based on first feature information, and the first maximum repetition count or the first repetition count set is determined based on the first repetition count and an adjustment factor.

In this embodiment, the sending unit 1302 is further configured to:

preconfigure the adjustment factor by using higher layer signaling; or
predefine the adjustment factor; or
indicate the adjustment factor by using physical layer signaling; or
determine the adjustment factor based on the first feature information.

In this embodiment, the communication apparatus may perform operations performed by the network device in the embodiments shown in FIG. 9. Details are not described herein again.

In correspondence to the method embodiments and the virtual apparatus embodiments provided in this application, an embodiment of this application further provides a communication apparatus. The following describes a hardware structure of the communication apparatus.

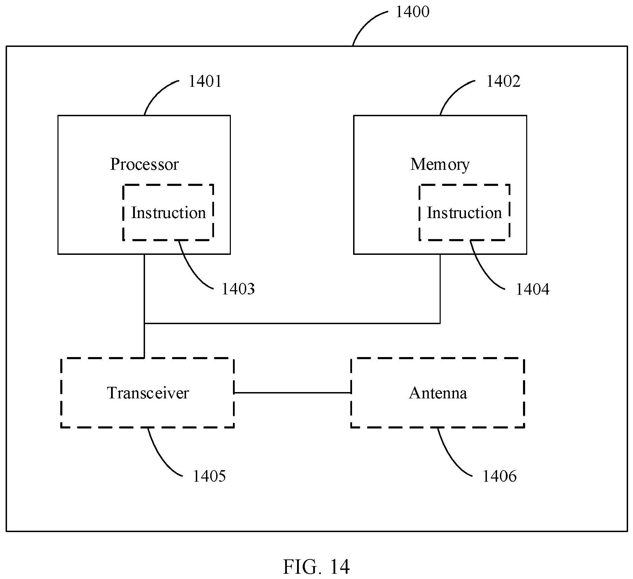

FIG. 14 is a schematic diagram of a structure of a communication apparatus according to an embodiment of this application. The communication apparatus 1400 may be the terminal device in FIG. 4 to FIG. 9, and is configured to implement the method corresponding to the terminal device in the foregoing method embodiments. Alternatively, the communication apparatus may be the network device in FIG. 4 to FIG. 9, and is configured to implement the method corresponding to the network device in the foregoing method embodiments. For a specific function, reference may be made to the description in the foregoing method embodiment.

The communication apparatus 1400 includes one or more processors 1401. The processor 1401 may also be referred to as a processing unit, and may implement a specific control function. The processor 1401 may be a general-purpose processor, a dedicated processor, or the like. For example, the processor 1401 includes a baseband processor, a central processing unit, an application processor, a modem processor, a graphics processing unit, an image signal processor, a digital signal processor, a video codec processor, a controller, a memory, and/or a neural-network processing unit. The baseband processor may be configured to process a communication protocol and communication data. The central processing unit may be configured to control the communication apparatus 1400, execute software programs, and/or process data. Different processors may be independent components, or may be integrated into one or more processors, for example, integrated into one or more application-specific integrated circuits.

Optionally, the communication apparatus 1400 includes one or more memories 1402, configured to store instructions 1404, and the instructions may be run on the processor, so that the terminal device 1400 performs the method described in the foregoing method embodiment. Optionally, the memory 1402 may further store data. The processor and the memory may be separately disposed, or may be integrated together.

Optionally, the communication apparatus 1401 may include instructions 1403 (sometimes may also be referred to as code or a program), and the instructions 1403 may be run on the processor, so that the communication apparatus 1400 performs the method described in the foregoing embodiment. Optionally, the processor 1401 may store data.

Optionally, the communication apparatus 1400 may further include a transceiver 1405 and an antenna 1406. The transceiver 1405 may be referred to as a transceiver unit, a transceiver, a transceiver circuit, a transceiver, an input/output interface, or the like, and is configured to implement a transceiver function of the communication apparatus 1400 through the antenna 1406.

Optionally, the communication apparatus 1400 may further include one or more of the following components: a wireless communication module, an audio module, an external memory interface, an internal memory, a universal serial bus (universal serial bus, USB) interface, a power management module, an antenna, a loudspeaker, a microphone, an input/output module, a sensor module, a motor, a camera, or a display, and etc. It may be understood that, in some embodiments, the UE 1400 may include more or fewer components, or some components may be integrated, or some components may be split. These components may be hardware, software, or a combination of software and hardware.

The processor 1401 and the transceiver 1405 described in this application may be implemented in an integrated circuit (integrated circuit, IC), an analog IC, a radio frequency integrated circuit (radio frequency integrated circuit, RFIC), a hybrid signal IC, an application-specific integrated circuit (application-specific integrated circuit, ASIC), a printed circuit board (printed circuit board, PCB), an electronic device, or the like. The communication apparatus that implements the communication apparatus described in this specification may be an independent device (e.g., an independent integrated circuit, and a mobile phone), or may be a part of a larger device (e.g., a module that can be embedded in another device) For details, refer to the foregoing descriptions of the terminal device and the network device. Details are not described herein again.

The transceiver unit 1001 in the communication apparatus 1000 is equivalent to the transceiver 1405 in the communication apparatus 1400. The processing unit 1002 in the communication apparatus 1000 may be equivalent to the processor 1401 in the communication apparatus 1400.

The transceiver unit 1102 in the communication apparatus 1100 is equivalent to the transceiver 1405 in the communication apparatus 1400. The processing unit 1101 in the communication apparatus 1100 may be equivalent to the processor 1401 in the communication apparatus 1400.

The transceiver unit 1201 in the communication apparatus 1200 is equivalent to the transceiver 1405 in the communication apparatus 1400. The processing unit 1202 in the communication apparatus 1200 may be equivalent to the processor 1401 in the communication apparatus 1400.

The sending unit 1302 in the communication apparatus 1300 is equivalent to the transceiver 1405 in the communication apparatus 1400. The processing unit 1301 in the communication apparatus 1300 may be equivalent to the processor 1401 in the communication apparatus 1400.

An embodiment of this application provides a communication apparatus. The communication apparatus may be used in the foregoing embodiments. The communication apparatus includes a corresponding means (means), a unit, and/or a circuit used to implement the terminal device in the embodiments shown in FIG. 4 to FIG. 9. For example, the terminal device includes a transceiver module, configured to support the terminal device in implementing a transceiver function, and a processing module, configured to support the terminal device in processing a signal.

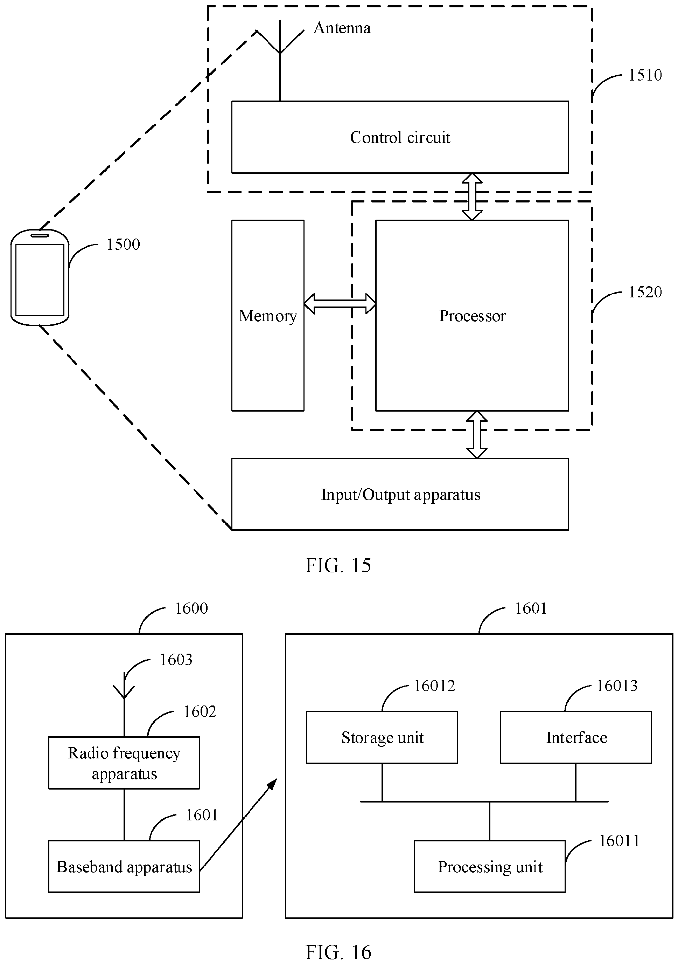

FIG. 15 is a schematic diagram of a structure of a communication apparatus according to an embodiment of this application.

The communication apparatus 1500 is applicable to the method embodiments shown in FIG. 4 to FIG. 9. For ease of description, FIG. 15 shows only main components of the communication apparatus 1500. As shown in FIG. 15, the communication apparatus 1500 includes a processor, a memory, a control circuit, an antenna, and an input/output apparatus. The processor is mainly configured to process a communication protocol and communication data, control the communication apparatus 1500, execute a software program, and process data of the software program. The memory is mainly configured to store the software program and data. The control circuit is mainly configured to convert a baseband signal and a radio frequency signal and process the radio frequency signal. The antenna is mainly configured to receive and send a radio frequency signal in a form of an electromagnetic wave. The input/output apparatus, such as a touchscreen, a display, or a microphone, or a keyboard, is mainly configured to: receive data input by a user and output data to the user.

That the communication apparatus 1500 is a mobile phone is used as an example. After the communication apparatus 1500 is powered on, the processor may read a software program in a storage unit, interpret and execute instructions of the software program, and process data of the software program. When needing to send data through the antenna, the processor outputs a baseband signal to the control circuit after performing baseband processing on to-be-sent data. After performing radio frequency processing on the baseband signal, the control circuit sends a radio frequency signal in an electromagnetic wave form through the antenna. When data is sent to the communication apparatus 1500, the control circuit receives a radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 15 shows only one memory and one processor. In some embodiments, the communication apparatus 1500 may include a plurality of processors and memories. The memory may also be referred to as a storage medium, a storage device, or the like. This is not limited in this embodiment of the present invention.

In an optional implementation, the processor may include a baseband processor and a central processing unit. The baseband processor is mainly configured to process the communication protocol and the communication data, and the central processing unit is mainly configured to: control the entire communication apparatus 1500, execute the software program, and process the data of the software program. Functions of the baseband processor and the central processing unit are integrated into the processor in FIG. 15. A person skilled in the art may understand that the baseband processor and the central processing unit may be independent processors, and are interconnected by using a technology such as a bus. The communication apparatus 1500 may include a plurality of baseband processors to adapt to different network standards. The communication apparatus 1500 may include a plurality of central processing units to enhance a processing capability of the communication apparatus 1500. Components of the communication apparatus 1500 may be connected through various buses. The baseband processor may also be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

In an example, an antenna and a control circuit having a transceiver function may be considered as a transceiver unit 1510 of the communication apparatus 1500, and a processor having a processing function may be considered as a processing unit 1520 of the communication apparatus 1500. As shown in FIG. 15, the communication apparatus 1500 includes the transceiver unit 1510 and the processing unit 1520. The transceiver unit may also be referred to as a transceiver machine, a transceiver, a transceiver apparatus, or the like. Optionally, a component configured to implement a receiving function in the transceiver unit 1510 may be considered as a receiving unit, and a component configured to implement a sending function in the transceiver unit 1510 may be considered as a sending unit. In other words, the transceiver unit 1510 includes the receiving unit and the sending unit. For example, the receiving unit may also be referred to as a receiver, a receive machine, or a receiving circuit, and the sending unit may also be referred to as a transmitter, a transmit machine, or a transmitting circuit.

The transceiver unit 1001 in the communication apparatus 1000 is equivalent to the transceiver unit 1510 in the communication apparatus 1500. The processing unit 1002 in the communication apparatus 1000 may be equivalent to the processing unit 1520 in the communication apparatus 1500.

The transceiver unit 1201 in the communication apparatus 1200 is equivalent to the transceiver unit 1510 in the communication apparatus 1500. The processing unit 1202 in the communication apparatus 1200 may be equivalent to the processing unit 1520 in the communication apparatus 1500.

The communication apparatus 1500 in this embodiment of this application may be corresponding to the terminal device in the foregoing method embodiments. The transceiver unit 1510, the processing unit 1520, and the like in the communication apparatus 1500 may implement functions and/or various steps and methods implemented by the terminal device in the foregoing method embodiments. For brevity, details are not described herein again.

An embodiment of this application further provides a communication apparatus. The communication apparatus may be used in the foregoing embodiments. The communication apparatus includes a means (means), a unit, and/or a circuit used to implement a function of the network device in the embodiments shown in FIG. 4 to FIG. 9. For example, the communication apparatus includes a transceiver unit, configured to support the network device in implementing a transceiver function, and a processing unit, configured to support the network device in processing a signal. It may be understood that a first network device and a second network device are relative to one or some UEs, and relative to some other UEs, functions of the first network device and the second network device may be interchangeable.

FIG. 16 is a schematic diagram of a structure of a communication apparatus according to an embodiment of this application. As shown in FIG. 16, the communication apparatus 1600 is applicable to functions of the network device in the method embodiments shown in FIG. 4 to FIG. 9. The communication apparatus includes a baseband apparatus 1601, a radio frequency apparatus 1602, and an antenna 1603. In an uplink direction, the radio frequency apparatus 1602 receives, through the antenna 1603, information sent by a terminal device, and sends, to the baseband apparatus 1601 for processing, the information sent by the terminal device. In a downlink direction, the baseband apparatus 1601 processes information about the terminal device, and sends the information to the radio frequency apparatus 1602. The radio frequency apparatus 1602 processes the information about the terminal device, and then sends the processed information to the terminal device through the antenna 1601.

The baseband apparatus 1601 includes one or more processing units 16011, a storage unit 16012, and an interface 16013. The processing unit 16011 is configured to support the communication apparatus in performing a function of the network device in the foregoing method embodiment. The storage unit 16012 is configured to store a software program and/or data. The interface 16013 is configured to exchange information with the radio frequency apparatus 1602. The interface includes an interface circuit, configured to input and output information. In an implementation, the processing unit is an integrated circuit, for example, one or more ASICs, one or more DSPs, one or more FPGAs, or a combination of these types of integrated circuits. These integrated circuits may be integrated together to form a chip. The storage unit 16012 and the processing unit 16011 may be located in a same chip, that is, an on-chip storage element. Alternatively, the storage unit 16012 and the processing unit 16011 may be on a different chip from the processing element 16011, that is, an off-chip storage element. The storage unit 16012 may be one memory, or may be a collective name of a plurality of memories or storage elements.

The communication apparatus may implement some or all of the steps in the foregoing method embodiments in a form of scheduling programs by one or more processing units. For example, a corresponding function of the network device in FIG. 4 to FIG. 9 is implemented. The one or more processing units may support radio access technologies of a same standard, or may support radio access technologies of different standards.

The transceiver unit 1102 in the communication apparatus 1100 is equivalent to the interface 16013 in the communication apparatus 1600. The processing unit 1101 in the communication apparatus 1100 may be equivalent to the processing unit 16011 in the communication apparatus 1600.

The sending unit 1302 in the communication apparatus 1300 is equivalent to the interface 16013 in the communication apparatus 1600. The processing unit 1301 in the communication apparatus 1300 may be equivalent to the processing unit 16011 in the communication apparatus 1600.

The communication apparatus 1600 in this embodiment of this application may be corresponding to the network device in the foregoing method embodiments. The interface 16013, the processing unit 16011, and the like in the communication apparatus 1600 may implement functions and/or various steps and methods implemented by the network device in the foregoing method embodiments. For brevity, details are not described herein again.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, the unit division is merely logical function division, units described as separate parts may or may not be physically separate, and parts displayed as units may or may not be physical units. That is, it may be located in one place, or it may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on such an understanding, the technical solutions of this application may be implemented in a form of a software product. The computer software product is stored in a storage medium, and includes several instructions for instructing a computer device (which may be a personal computer, a server, or a network device) to perform all or some of the steps of the methods described in the embodiments. The foregoing computer-readable storage medium may be any usable medium that can be accessed by a computer. For example, but not limited to, the computer-readable medium may include a random access memory (random access memory, RAM), a read-only memory (read-only memory, ROM), and a programmable read-only memory (programmable ROM, PROM), erasable programmable read-only memory (erasable PROM, EPROM), electrically erasable programmable read-only memory (electrically erasable programmable read-only memory, EEPROM), compact disc read-only memory (compact disc read-only memory, CD-ROM), universal serial bus flash disk (universal serial bus flash disk), removable hard disk, or other optical disk storage, disk storage medium or other magnetic storage device, or can be used to carry or store desired program code in the form of instructions or data structures and can be used by a computer access to any other media. In addition, through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), or a direct rambus dynamic random access memory (direct rambus RAM, DR RAM).

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

**Claims**

1. A communication method, comprising:

   receiving first information from a network device;
   determining access status information and/or a first repetition count set of a first channel based on the first information, wherein the first repetition count set comprises at least one repetition count;
   determining, based on the access status information, whether a network is accessed; and/or
   determining a first repetition count of the first channel based on the first repetition count set, and transmitting the first channel based on the first repetition count.

2. The communication method according to claim 1, wherein the access status information is determined based on a bit status in the first information, the bit status indicates that a terminal device is not allowed to access the network, and the bit status is related to first feature information of the terminal device.

3. The communication method according to claim 1, wherein the first information comprises repetition level information, and the determining a first repetition count set of a first channel based on the first information comprises:
   determining the first repetition count set based on the repetition level information.

4. The communication method according to any one of claims 1 to 3, wherein the determining a first repetition count of the first channel based on the first repetition count set comprises:
determining the first repetition count based on a first maximum repetition count and the first repetition count set, wherein the first maximum repetition count is configured by using a radio resource control message.

5. The communication method according to claim 3, wherein the repetition level information comprises a first value, and the first value indicates that the first repetition count is 1, or indicates that the first repetition count is a first predefined value.

6. The communication method according to claim 1, wherein the first information comprises second feature information, the second feature information is used to determine the first repetition count set, and the second feature information is related to the first repetition count.

7. The communication method according to claim 1, wherein the determining a first repetition count of the first channel based on the first repetition count set comprises:
determining the first repetition count based on first indication information and the first repetition count set, wherein the first indication information is from the network device.

8. The communication method according to claim 7, wherein the method further comprises:

   determining a second repetition count of a second channel based on the first repetition count and a first parameter, wherein the first parameter is configured by the network device; and
   the first channel is a physical downlink control channel, and the second channel is a physical downlink shared channel; or
   the first channel is a physical downlink shared channel, and the second channel is a physical downlink control channel; or
   the first channel is a physical downlink control channel, and the second channel is a physical uplink shared channel; or
   the first channel is a physical uplink shared channel, and the second channel is a physical downlink control channel.

9. The communication method according to claim 8, wherein the determining a second repetition count of a second channel based on the first repetition count and a first parameter comprises:
performing a linear operation on the first repetition count and the first parameter to obtain the second repetition count.

10. A communication method, comprising:

    determining first feature information of a terminal device; and
    sending first information to the terminal device based on the first feature information, and transmitting a first channel based on a first repetition count, wherein the first information indicates access status information and/or a first repetition count set of the first channel, the first repetition count set comprises at least one repetition count, and the first repetition count is determined based on the first feature information.

11. The communication method according to claim 10, wherein the access status information is determined based on a bit status in the first information, the bit status indicates that a terminal device is not allowed to access a network, and the bit status is related to the first feature information of the terminal device.

12. The communication method according to claim 10, wherein the first information comprises repetition level information and a first maximum repetition count, the repetition level information indicates the first repetition count set, and the first maximum repetition count is determined based on the first feature information.

13. The communication method according to claim 12, wherein the repetition level information comprises a first value, and the first value indicates that the first repetition count is 1, or indicates that the first repetition count is a first predefined value.

14. The communication method according to claim 10, wherein the first information comprises second feature information, the second feature information is used to determine the first repetition count set, and the second feature information is related to the first repetition count.

**15.** The communication method according to claim 10, wherein the method further comprises:
determining first indication information based on the first feature information, wherein the first indication information is used to determine the first repetition count.

**16.** The communication method according to claim 15, wherein the first information further comprises a first parameter, and the first parameter is used to determine a second repetition count of a second channel; and

the first channel is a physical downlink control channel, and the second channel is a physical downlink shared channel; or
the first channel is a physical downlink shared channel, and the second channel is a physical downlink control channel; or
the first channel is a physical downlink control channel, and the second channel is a physical uplink shared channel; or
the first channel is a physical uplink shared channel, and the second channel is a physical downlink control channel.

**17.** A communication method, comprising:

receiving a first maximum repetition count or a first repetition count set from a network device, wherein the first repetition count set comprises at least one repetition count;
determining a first repetition count of a first channel based on the first maximum repetition count or the first repetition count set and an adjustment factor; and
transmitting the first channel based on the first repetition count.

**18.** The communication method according to claim 17, wherein the determining a first repetition count of a first channel based on the first maximum repetition count and an adjustment factor comprises:

determining a second maximum repetition count based on the first maximum repetition count and the adjustment factor; and
determining the first repetition count based on the second maximum repetition count and first indication information, wherein the first indication information is from the network device.

**19.** The communication method according to claim 17, wherein the determining a first repetition count of a first channel based on the first repetition count set and an adjustment factor comprises:

determining a second repetition count set based on the first repetition count set and the adjustment factor; and
determining the first repetition count based on the second repetition count set and first indication information, wherein the first indication information is from the network device.

**20.** The communication method according to any one of claims 17 to 19, wherein the adjustment factor is preconfigured by the network device by using higher layer signaling; or

the adjustment factor is predefined by the network device; or
the adjustment factor is indicated by the network device by using physical layer signaling; or
the adjustment factor is related to first feature information.

**21.** A communication method, comprising:

determining first feature information of a terminal device; and
sending a first maximum repetition count or a first repetition count set to the terminal device based on the first feature information, and transmitting a first channel based on a first repetition count, wherein the first repetition count is determined based on a device type, and the first maximum repetition count or the first repetition count set is determined based on the first repetition count and an adjustment factor.

**22.** The communication method according to claim 21, wherein the method further comprises:

preconfiguring the adjustment factor by using higher layer signaling; or
predefining the adjustment factor; or

indicating the adjustment factor by using physical layer signaling; or
determining the adjustment factor based on the first feature information.

23. A communication apparatus, comprising:

a transceiver unit, configured to: receive first information from a network device, determine a first repetition count of a first channel based on a first repetition count set, and transmit the first channel based on the first repetition count; and
a processing unit, configured to: determine access status information and/or the first repetition count set of the first channel based on the first information, wherein the first repetition count set comprises at least one repetition count; and determine, based on the access status information, whether to access a network.

24. The communication apparatus according to claim 23, wherein the access status information is determined based on a bit status in the first information, the bit status indicates that a terminal device is not allowed to access the network, and the bit status is related to first feature information of the terminal device.

25. The communication apparatus according to claim 23, wherein the first information comprises repetition level information, and the processing unit is specifically configured to:
determine the first repetition count set based on the repetition level information.

26. The communication apparatus according to any one of claims 23 to 25, wherein the transceiver unit is specifically configured to:
determine the first repetition count based on a first maximum repetition count and the first repetition count set, wherein the first maximum repetition count is configured by using a radio resource control message.

27. The communication apparatus according to claim 25, wherein the repetition level information comprises a first value, and the first value indicates that the first repetition count is 1, or indicates that the first repetition count is a first predefined value.

28. The communication apparatus according to claim 23, wherein the first information comprises second feature information, the second feature information is used to determine the first repetition count set, and the second feature information is related to the first repetition count.

29. The communication apparatus according to claim 23, wherein the transceiver unit is specifically configured to:
determine the first repetition count based on first indication information and the first repetition count set, wherein the first indication information is from the network device.

30. The communication apparatus according to claim 29, wherein the transceiver unit is further configured to:

determine a second repetition count of a second channel based on the first repetition count and a first parameter, wherein the first parameter is configured by the network device; and
the first channel is a physical downlink control channel, and the second channel is a physical downlink shared channel; or
the first channel is a physical downlink shared channel, and the second channel is a physical downlink control channel; or
the first channel is a physical downlink control channel, and the second channel is a physical uplink shared channel; or
the first channel is a physical uplink shared channel, and the second channel is a physical downlink control channel.

31. The communication apparatus according to claim 30, wherein the transceiver unit is further configured to:
perform a linear operation on the first repetition count and the first parameter to obtain the second repetition count.

32. A communication apparatus, comprising:

a processing unit, configured to determine first feature information of a terminal device; and
a transceiver unit, configured to: send first information to the terminal device based on the first feature information, and transmit a first channel based on a first repetition count, wherein the first information indicates access status information and/or a first repetition count set of the first channel, the first repetition count set comprises at least one repetition count, and the first repetition count is determined based on the first feature information.

33. The communication apparatus according to claim 32, wherein the access status information is determined based on a bit status in the first information, the bit status indicates that a terminal device is not allowed to access a network, and the bit status is related to the first feature information of the terminal device.

34. The communication apparatus according to claim 32, wherein the first information comprises repetition level information and a first maximum repetition count, the repetition level information indicates the first repetition count set, and the first maximum repetition count is determined based on the first feature information.

35. The communication apparatus according to claim 34, wherein the repetition level information comprises a first value, and the first value indicates that the first repetition count is 1, or indicates that the first repetition count is a first predefined value.

36. The communication apparatus according to claim 32, wherein the first information comprises second feature information, the second feature information is used to determine the first repetition count set, and the second feature information is related to the first repetition count.

37. The communication apparatus according to claim 32, wherein the transceiver unit is further configured to: determine first indication information based on the first feature information, wherein the first indication information is used to determine the first repetition count.

38. The communication apparatus according to claim 37, wherein the first information further comprises a first parameter, and the first parameter is used to determine a second repetition count of a second channel; and

the first channel is a physical downlink control channel, and the second channel is a physical downlink shared channel; or
the first channel is a physical downlink shared channel, and the second channel is a physical downlink control channel; or
the first channel is a physical downlink control channel, and the second channel is a physical uplink shared channel; or
the first channel is a physical uplink shared channel, and the second channel is a physical downlink control channel.

39. A communication apparatus, comprising:

a transceiver unit, configured to: receive a first maximum repetition count or a first repetition count set from a network device, wherein the first repetition count set comprises at least one repetition count, and transmit a first channel based on the first repetition count; and
a processing unit, configured to determine the first repetition count of the first channel based on the first maximum repetition count or the first repetition count set and an adjustment factor.

40. The communication apparatus according to claim 39, wherein the processing unit is specifically configured to:

determine a second maximum repetition count based on the first maximum repetition count and the adjustment factor; and
determine the first repetition count based on the second maximum repetition count and first indication information, wherein the first indication information is from the network device.

41. The communication apparatus according to claim 39, wherein the processing unit is specifically configured to:

determine a second repetition count set based on the first repetition count set and the adjustment factor; and
determine the first repetition count based on a second repetition count set and first indication information, wherein the first indication information is from the network device.

42. The communication apparatus according to any one of claims 39 to 41, wherein the adjustment factor is preconfigured by the network device by using higher layer signaling; or

the adjustment factor is predefined by the network device; or
the adjustment factor is indicated by the network device by using physical layer signaling; or
the adjustment factor is related to first feature information.

43. A communication apparatus, comprising:

a processing unit, configured to: determine first feature information of a terminal device; and
a sending unit, configured to: send a first maximum repetition count or a first repetition count set to the terminal device based on the first feature information, and transmit a first channel based on a first repetition count, wherein the first repetition count is determined based on a device type, and the first maximum repetition count or the first repetition count set is determined based on the first repetition count and an adjustment factor.

44. The communication apparatus according to claim 43, wherein the sending unit is further configured to:

preconfigure the adjustment factor by using higher layer signaling; or
predefine the adjustment factor; or
indicate the adjustment factor by using physical layer signaling; or
determine the adjustment factor based on the first feature information.

45. A communication apparatus, comprising a processor and a memory, wherein
the processor is configured to execute instructions stored in the memory, so that the communication apparatus is enabled to perform the method according to any one of claims 1 to 9 and claims 17 to 20.

46. A communication apparatus, comprising a processor and a memory, wherein
the processor is configured to execute instructions stored in the memory, so that the communication apparatus is enabled to perform the method according to any one of claims 10 to 16 and claim 21 or 22.

47. A computer-readable storage medium, wherein the computer-readable storage medium stores a computer program, and when the computer program is run on a computer, the computer is enabled to perform the method according to any one of claims 1 to 22.

48. A computer program product, wherein when the computer program product is executed on a computer, the computer performs the method according to any one of claims 1 to 22.

User equipment                 Base station

①   ——— Random preamble sequence ———▶

◀——— Random access response ——— ②

③   ——— Scheduled transmission signal ———▶

◀——— Contention resolution message ——— ④

FIG. 1

User equipment                 Base station

⓪   ◀— Random preamble sequence assignment —

——— Random preamble sequence ———▶ ①

②   ◀——— Random access response ———

FIG. 2

FIG. 3

```
┌─────────────────────┐                    ┌─────────────────────┐
│   Terminal device   │                    │   Network device    │
└──────────┬──────────┘                    └──────────┬──────────┘
           │        401: Access request               │
           │ - - - - - - - - - - - - - - - - - - - - ▶│
           │                                          │
           │                              ┌───────────┴────────────┐
           │                              │ 402: Determine access  │
           │                              │ status information and/ │
           │                              │ or a repetition level   │
           │                              └───────────┬────────────┘
           │  403: Access status information and/or   │
           │              repetition level            │
           │◀─────────────────────────────────────────│
┌──────────┴──────────────┐                           │
│ 404: Determine whether  │                           │
│ the terminal device can │                           │
│ access a network        │                           │
└──────────┬──────────────┘                           │
  ┌ ─ ─ ─ ─┴─ ─ ─ ─ ─ ─ ─ ┐                           │
  │ 405: Stop monitoring a │                          │
  │         PDCCH          │                          │
  └ ─ ─ ─ ─┬─ ─ ─ ─ ─ ─ ─ ┘                           │
  ┌ ─ ─ ─ ─┴─ ─ ─ ─ ─ ─ ─ ┐                           │
  │ 406: Determine a first │                          │
  │    repetition count    │                          │
  └ ─ ─ ─ ─┬─ ─ ─ ─ ─ ─ ─ ┘                           │
           │        407: First channel                │
           │◀────────────────────────────────────────▶│
           │                                          │
```

FIG. 4

```
┌─────────────────────────┐                    ┌─────────────────────────┐
│      Terminal device    │                    │      Network device     │
└─────────────────────────┘                    └─────────────────────────┘
            │                                              │
            │         501: Access request                  │
            │ - - - - - - - - - - - - - - - - - - - - - - →│
            │                                              │
            │                          ┌───────────────────────────────────────┐
            │                          │ 502: Determine a repetition level       │
            │                          └───────────────────────────────────────┘
            │                                              │
            │         503: Repetition level                │
            │←─────────────────────────────────────────────│
            │                                              │
┌───────────────────────────────────┐                     │
│ 504: Determine whether the terminal│                     │
│  device can access a network       │                     │
└───────────────────────────────────┘                     │
            │                                              │
┌───────────────────────────────────┐                     │
│ 505: Stop monitoring a PDCCH        │                     │
└───────────────────────────────────┘                     │
            │                                              │
┌───────────────────────────────────┐                     │
│ 506: Determine a first repetition count│                 │
└───────────────────────────────────┘                     │
            │         507: First channel                   │
            │←────────────────────────────────────────────→│
            │                                              │
```

FIG. 5

```
┌─────────────────────────┐                    ┌─────────────────────────┐
│     Terminal device     │                    │      Network device     │
└─────────────────────────┘                    └─────────────────────────┘
            │               601: Access request            │
            │ - - - - - - - - - - - - - - - - - - - - - - >│
            │                                              │
            │                              ┌───────────────────────────────┐
            │                              │ 602: Determine second feature │
            │                              │          information          │
            │                              └───────────────────────────────┘
            │          603: Second feature information      │
            │<─────────────────────────────────────────────│
            │                                              │
┌─────────────────────────────────────┐                   │
│ 604: Determine a first repetition count │                │
└─────────────────────────────────────┘                   │
            │              605: First channel               │
            │<────────────────────────────────────────────>│
```

FIG. 6

```
┌─────────────────────────┐                    ┌─────────────────────────┐
│     Terminal device     │                    │      Network device     │
└─────────────────────────┘                    └─────────────────────────┘
            │               701: Access request            │
            │ - - - - - - - - - - - - - - - - - - - - - - >│
            │                                              │
            │                           ┌────────────────────────────────────┐
            │                           │ 702: Determine a first repetition count │
            │                           │  set and a second repetition count set  │
            │                           └────────────────────────────────────┘
            │     703: First repetition count set and second │
            │                  repetition count set           │
            │<─────────────────────────────────────────────│
            │                                              │
┌───────────────────────────────────────┐                 │
│ 704: Determine a first repetition count │                │
│    and a second repetition count        │                │
└───────────────────────────────────────┘                 │
            │    705: First channel and second channel      │
            │<─────────────────────────────────────────────│
```

FIG. 7

FIG. 8

Terminal device

Network device

901: Access request

902: Determine a first maximum repetition count or a first maximum repetition count set

903: First maximum repetition count or a first maximum repetition count set

904: Determine a first repetition count

905: First channel

FIG. 9

1000

Communication apparatus

Transceiver unit — 1001

Processing unit — 1002

FIG. 10

1100

Communication apparatus

Processing unit — 1101

Transceiver unit — 1102

FIG. 11

1200

Communication apparatus

Transceiver unit — 1201

Processing unit — 1202

FIG. 12

1300

Communication apparatus

Processing unit — 1301

Sending unit — 1302

FIG. 13

FIG. 14

Antenna

Control circuit

1510

1500

Memory

Processor

1520

Input/Output apparatus

FIG. 15

1600

1603

1601

16012

16013

1602

Storage unit

Interface

Radio frequency apparatus

1601

16011

Baseband apparatus

Processing unit

FIG. 16

## INTERNATIONAL SEARCH REPORT

| | International application No. |
|---|---|
| | **PCT/CN2020/123429** |

**A. CLASSIFICATION OF SUBJECT MATTER**

H04W 48/00(2009.01)i; H04W 74/00(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

WPI, EPODOC, CNPAT, CNKI: 5G, NR, 重复, 集合, 接入, 物理下行控制信道, 物理下行共享信道, 物理上行共享信道, 类型, 调整因子, repetition, set, access, PDCCH, PDSCH, PUSCH, type, factor

**C. DOCUMENTS CONSIDERED TO BE RELEVANT**

| Category* | Citation of document, with indication, where appropriate, of the relevant passages | Relevant to claim No. |
|---|---|---|
| X | CN 107734597 A (ZTE CORPORATION) 23 February 2018 (2018-02-23) description paragraphs 0114, 0317-0327, 0427-0441, 0476-0487, 0608-0609, figures 7, 11-12 | 1-16, 23-38, 47-48 |
| Y | CN 107734597 A (ZTE CORPORATION) 23 February 2018 (2018-02-23) description paragraphs 0114, 0317-0327, 0427-0441, 0476-0487, figures 7, 11-12 | 17-22, 39-46 |
| Y | US 2020137624 A1 (QUALCOMM INCORPORATED) 30 April 2020 (2020-04-30) description, paragraph 0103 | 17-22, 39-46 |
| A | CN 110999491 A (LG ELECTRONICS INC.) 10 April 2020 (2020-04-10) entire document | 1-48 |
| A | WO 2020033884 A1 (INTEL CORPORATION) 13 February 2020 (2020-02-13) entire document | 1-48 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **13 July 2021** | **29 July 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/123429**

| Patent document cited in search report | | | Publication date (day/month/year) | Patent family member(s) | | | Publication date (day/month/year) |
|---|---|---|---|---|---|---|---|
| CN | 107734597 | A | 23 February 2018 | EP | 3731567 | A1 | 28 October 2020 |
| | | | | CN | 110234171 | A | 13 September 2019 |
| | | | | EP | 3525519 | A1 | 14 August 2019 |
| | | | | US | 2019281632 | A1 | 12 September 2019 |
| US | 2020137624 | A1 | 30 April 2020 | TW | 202037212 | A | 01 October 2020 |
| | | | | WO | 2020092227 | A1 | 07 May 2020 |
| | | | | CN | 112889310 | A | 01 June 2021 |
| CN | 110999491 | A | 10 April 2020 | EP | 3664559 | A1 | 10 June 2020 |
| | | | | JP | 2020532242 | A | 05 November 2020 |
| | | | | US | 2020187177 | A1 | 11 June 2020 |
| | | | | KR | 20200008632 | A | 28 January 2020 |
| | | | | WO | 2019203547 | A1 | 24 October 2019 |
| WO | 2020033884 | A1 | 13 February 2020 | CN | 112567662 | A | 26 March 2021 |

Form PCT/ISA/210 (patent family annex) (January 2015)